(19) Europäisches Patentamt
European Patent Office
Office européen des brevets

(11) **EP 4 097 505 B1**

(12) **EUROPÄISCHE PATENTSCHRIFT**

(45) Veröffentlichungstag und Bekanntmachung des Hinweises auf die Patenterteilung:
**20.03.2024   Patentblatt 2024/12**

(21) Anmeldenummer: **21702436.3**

(22) Anmeldetag: **27.01.2021**

(51) Internationale Patentklassifikation (IPC):
**G01S 13/76** $^{(2006.01)}$

(52) Gemeinsame Patentklassifikation (CPC):
**G01S 7/4008; G01S 7/4021; G01S 13/0209; G01S 13/765**

(86) Internationale Anmeldenummer:
**PCT/EP2021/051896**

(87) Internationale Veröffentlichungsnummer:
**WO 2021/151967 (05.08.2021 Gazette 2021/31)**

(54) **DECAWAVE-ULTRA-BREITBAND-FEHLER-KORREKTUR**

DECAWAVE ULTRA-WIDEBAND ERROR CORRECTION

CORRECTION D'ERREUR DANS UNE BANDE ULTRA-LARGE À ONDES DÉCAMÉTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2020   DE 102020201150**

(43) Veröffentlichungstag der Anmeldung:
**07.12.2022   Patentblatt 2022/49**

(73) Patentinhaber: **Fraunhofer-Gesellschaft zur Förderung
der angewandten Forschung e.V.
80686 München (DE)**

(72) Erfinder:
• **SIDORENKO, Juri
76725 Ettlingen (DE)**
• **SCHERER-NEGENBORN, Norbert
76725 Ettlingen (DE)**
• **ARENS, Michael
76725 Ettlingen (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
• JURI SIDORENKOAB ET AL: "Decawave UWB clock drift correction and powerself-calibration", ARXIV.ORG, CORNELL UNIVERSITY LIBRARY, 201 OLIN LIBRARY CORNELL UNIVERSITY ITHACA, NY 14853, 28. Februar 2019 (2019-02-28), XP081034796,
• JURI SIDORENKO ET AL: "Fusion of time of arrival and time difference of arrival for ultra-wideband indoor localization", ARXIV.ORG, CORNELL UNIVERSITY LIBRARY, 201 OLIN LIBRARY CORNELL UNIVERSITY ITHACA, NY 14853, 3. März 2019 (2019-03-03), XP081125362,
• SMAOUI NOUR ET AL: "Study and Mitigation of Platform Related UWB Ranging Errors", 2020 INTERNATIONAL CONFERENCE ON COMMUNICATION SYSTEMS & NETWORKS (COMSNETS), IEEE, 7. Januar 2020 (2020-01-07), Seiten 346-353, XP033731554, DOI: 10.1109/COMSNETS48256.2020.9027356 [gefunden am 2020-03-06]

**Beschreibung**

Die vorliegende Anmeldung betrifft eine Anordnung zum Ausführen einer automatischen Fehlerkorrektur bei einer Distanzmessung zwischen zwei Transceivern, sowie ein Verfahren zum Ausführen einer automatischen Fehlerkorrektur bei einer Distanzmessung zwischen zwei Transceivern und ein Computerprogrammcode.

Auf dem Gebiet der Innenraum-Lokalisierung ist die Ultra-Breitband-Technologie (UWB-Technologie) unabkömmlich geworden. Der Markt verlangt, dass die UWB-Hardware billig, präzise und genau ist. Diese Anforderungen haben zu der Popularität von DecaWave®-UWB-Systemen geführt. Der Großteil der Veröffentlichungen über dieses System befasst sich mit der Korrektur von Signalleistung, Hardware-Verzögerung und Taktdrift bzw. Uhrenfehler (Clock Drift). Herkömmlicherweise wurde bisher angenommen, dass dieser Fehler nur zu Beginn des Betriebs auftritt und durch einen Warm-Up- bzw. Aufwärmprozess des Kristalls bzw. Quarzes des UWB-Systems verursacht wird.

Lokalisierung basierend auf der Ultra-Breitband(UWB)-Technologie kann in Innenraum-Umgebungen genutzt werden, in denen schmalbandige Systeme aufgrund von Fading meist fehlerbehaftet sind [1], [2]. In den letzten Jahren hat diese Technologie mehr Aufmerksamkeit erhalten und wird voraussichtlich auch in Zukunft eine wichtige Rolle spielen [3]. Dies ist hauptsächlich begründet durch den fallenden Preis und die sinkende Größe der Bauelemente. Einer der Marktführer ist DecaWave® Limited [4], wobei das UWB-Bauelement seit 2019 Teil der neuen Generation von Produkten von Apple ist [5] und vermutlich eine Revolution für erweiterte Realität (Augmented Reality), Smart Homes, mobiles Zahlen, schlüssellosen Autozugang und Innenraum-Navigation auslösen wird [6]. In der Praxis beträgt die Genauigkeit, die durch das DecaWave®-Bauelement erhalten wird, etwa 10 cm für Sichtlinien-Anwendungen (LOS-Anwendungen; LOS = Line of Sight) [7].

Der Großteil aller Veröffentlichungen über das DecaWave®-System konzentriert sich auf die Korrelation der Hardware-Verzögerung [8], den Einfluss der Signalleistung auf den Zeitstempel [9], [10] und die Taktdrift (Clock Drift) [11], [12], [13], [14]. Nur wenige Veröffentlichungen erwähnen den Warm-Up-Fehler, der der Temperaturfluktuation zuzuschreiben ist, der am Anfang entsteht [15], [16], [17]. Der Einfluss dieses Fehlers wird dadurch reduziert, dass einige Zeit abgewartet wird, bevor die Messungen erhalten werden [18], oder durch Adaption des Messfehlers in dem Zeitfehler-Korrekturmodell [16], [19]. In der vorliegenden Anmeldung wird gezeigt, dass neben der Temperatur eine zusätzliche Fehlerquelle eine große Auswirkung auf den Warm-Up-Fehler besitzt.

Die von DecaWave® Limited erhältlichen Bauelemente erfüllen den IEEE802.15.4-2011-Standard [7] und unterstützen sechs Frequenzbänder mit Mittenfrequenzen von 3,5 GHz bis 6,5 GHz mit Datenraten von bis zu 6,8 Mb/s. Abhängig von der ausgewählten Mittenfrequenz variiert die Bandbreite von 500 bis 1000 MHz. Die Signalabtastung wird durch einen internen 64 GHz-Chip mit einer Ereignis-Zeitgebungspräzision von 15 ps (4,496 mm) durchgeführt. Aufgrund allgemeiner Regulierungen ist die Übertragungsleistungsdichte auf -41,3 dBm/MHz eingeschränkt. Diese Regulierungen sind durch die große Bandbreite begründet, die durch den UWB-Transceiver eingenommen wird. Die hierin beschriebenen Experimente wurden mit dem DecaWave® EVK1000 ausgeführt. Diese Platine weist hauptsächlich einen DW1000-Chip und einen STM32 ARM-Prozessor auf.

Die DecaWave® ultra-wideband (UWB) Chips finden mittlerweile in nahezu allen Marktsegmenten wie Verbrauchermarkt, beim Handyzubehör, der Industrie oder der Fahrzeugindustrie etc. Anwendung. Im Verbrauchersektor beispielsweise bietet die UWB Positionierung viele Möglichkeiten zur Unterstützung des Alltags und dem Entertainment. Die UWB Chip können beispielsweise bei einer adaptiven Beleuchtung, bei standortbasierten Lautsprechersystemen, bei Sicherheitsüberwachungs- und Zugangssystemen (Kinder, Haustiere, ältere Menschen), bei Türschlosser und Garagenöffnern, bei Heimnetzwerken und bei drahtloser Konnektivität, bei Zahlungssicherheit, in der Robotik, oder der Sportanalytik eingesetzt werden. In der Industrie sind die Anwendungen noch vielfaltiger. UWB Positionierung kann beispielsweise in Warenhäusern, Krankenhäusern, Betreuungseinrichtungen, der Landwirtschaft oder sogar bei Minenarbeiten eingesetzt werden. Ferner können die UWB Chips bei einer Echtzeitansicht laufender Arbeiten, der Optimierung ein er Anlagennutzung, bei der Roboter- und Personennavigation, oder der Vermeidung von Gefahren hilfreich sein, indem die UWB Chips eingesetzt werden, um Werkzeuge bzw. Tools zu aktivieren oder zu deaktivieren.

Auch das autonome Fahren ist ein Kernthema, bei welchem UWB Chips eingesetzt werden können, da beim autonomen Fahren die Kenntnis über die genaue Position eines Fahrzeuges entscheidend ist. Beispielsweise können UWB Chips zur Vermeidung von Fußgänger- oderRadfahrerkollisionen, bei gesicherter Zufahrt (Passiver Einstieg/

Passiver Start), beim Parkservice /Bequemlichkeits-Parken, bei der Kommunikation zwischen Fahrzeug und Infrastruktur, bei Reifendruckkontrollsystemen zur Kommunikation, bei der Fahrzeug-zu-Fahrzeug-Kommunikation, bei einer Smart City Maut oder einer Parkraumbewirtschaftung eingesetzt werden.

Bei all diesen Anwendungsgebieten ist eine Positionsgenauigkeit maßgebend für den vorteilhaften Einsatz von UWB Chips. Eine Aufgabe der vorliegenden technischen Lehre besteht darin, eine Anordnung, ein Verfahren und eine Computerprogrammcode bereitzustellen, mit welcher oder welchem eine verbesserte Positionsgenauigkeit eines Objektes, insbesondere in Bezug zu einem Ausgangspunkt, ermittelt werden kann.

Dies wird durch den Gegenstand der unabhängigen Ansprüche der vorliegenden Anmeldung erreicht. Weitere erfindungsgemäße Ausführungsformen werden durch den Gegenstand der abhängigen Ansprüche der vorliegenden Anmeldung definiert.

Gemäß der hierin beschriebenen technischen Lehre ist eine Anordnung zum Ausführen einer automatischen Fehlerkorrektur bei einer Distanzmessung zwischen zwei Transceivern vorgeschlagen. Die Anordnung umfasst mindestens zwei Transceiver zum Senden und/oder Empfangen eines Signals, welche eine vorgegebene Distanz voneinander beabstandet sind. Die vorgeschlagene Anordnung ist dazu ausgebildet, bei der Distanzmessung die Frequenzdifferenz zwischen den mindestens zwei Transceivern auf einen vorbestimmten Wert zu regeln, und eine zu messende Distanz zwischen den mindestens zwei Transceivern mittels Zweiwege-Entfernungsmessung (two-way-ranging /TWR) in Abhängigkeit einer Sende-Signalstärke und einer Frequenzdifferenz des Signals zu bestimmen. Das Prinzip der Zweiwege-Entfernungsmessung (two-way-ranging /TWR) wird vorliegend nicht weiter eingegangen, da es bei einen Fachmann als bekannt angenommen wird. Ferner ist die Anordnung dazu ausgebildet, eine Sende-Signalstärke und eine Frequenzdifferenz des Signals einzustellen, wodurch ein Wert der zu messenden Distanz verändert ist. Eine solche veränderte gemessene Distanz wird bevorzugt in Abhängigkeit der eingestellten Werte gemessen. Die Erfinder der vorliegenden Erfindung haben herausgefunden, dass die Frequenzdifferenz einen direkten Einfluss auf das Setzen des Zeitstempels hat und die Frequenzdifferenz beim Empfänger zu einer Verschiebung des Zeitstempels führt. Es ist denkbar, dass eine Sende-Signalstärke und eine Frequenzdifferenz des Signals paarweise eingestellt werden oder auch nur eine Sende-Signalstärke oder nur eine Frequenzdifferenz verändert eingestellt wird. Jedenfalls kann auf Basis eines eingestellten Paares bestehend aus einer Sende-Signalstärke und einer Frequenzdifferenz ein Korrekturwert ermittelt werden. Die Anordnung ist daher ausgebildet, einen Korrekturwert basierend auf einer gemessenen Signalstärke, einer gemessenen Frequenzdifferenz und der gemessenen Distanz zu berechnen. Hierdurch kann die gemessene Distanz korrigiert werden. Die Anordnung ist ferner dazu ausgebildet, ein Korrigieren der gemessenen Distanz basierend auf dem ermittelten Korrekturwert durchzuführen. Vorteilhafterweise kann das Korrigieren automatisch erfolgen, wobei kein weiteres Messequipment benötigt wird. Aufgrund des Korrigierens der gemessenen Distanz ist es möglich, bei Distanzmessungen die Genauigkeit von zehn Zentimeter auf weniger als einen Zentimeter zu verbessern, insbesondere zu reduzieren. Hierdurch wird die vorgeschlagene Anordnung auch für Systeme interessant, bei welchen eine genaue Distanzmessung oder eine genaue Ortsauflösung maßgebend ist. Die ist beispielsweise bei tomografischen Anwendungen der Fall oder auch bei Radarsystem etc.. Es versteht sich, dass hierin die gemessene Distanz auch im Sinne von zu messender Distanz zu verstehen ist. Insbesondere nach Einstellen der vorgegebenen Distanz bei vorgegebenen Signalstärken und/oder vorgegebenen Frequenzdifferenzen ist der Begriff "gemessene Distanz" als "zu messende Distanz" zu verstehen.

Gemäß einer bevorzugten Ausführungsform der Anordnung weist die korrigierte Distanz durch das Korrigieren der gemessenen Distanz einen geringeren Fehler auf. Insbesondere liegt der Fehler der korrigierten Distanz bei weniger als 10 cm, besonders bevorzugt bei weniger als 1 cm. Der geringere Fehler der korrigierten Distanz konnte experimentell verifiziert werden. Die höhere Genauigkeit ermöglicht es, die vorgeschlagene Anordnung auf weiteren Anwendungsgebieten einzusetzen, wie beispielsweise in der Tomografie oder der Navigation etc..

Bevorzugt sind die mindestens zwei Transceiver in einer bekannten vorgegebenen Distanz $D_v$ zueinander beabstandet, um die gemessene Distanz zu ermitteln, wobei die gemessene Distanz von der bekannten vorgegebenen Distanz abweicht oder abweichen kann.. Die Differenz zwischen der gemessenen Distanz und der vorgegebenen Distanz, welche auch als Ground Truth-Distanz bezeichnet wird, kann beispielsweise einer Hardware-Verzögerung geschuldet sein. Diese Differenz zwischen bekannter vorgegebener Distanz und gemessener Distanz kann als konstant angenommen werden, insbesondere spätestens nach etwa 15 Minuten. Beispielsweise kann eine bekannte vorgegebene Distanz 1,5 m betragen und die gemessene Distanz kann, insbesondere nach etwa 15 Minuten, 1,66 m betragen. Mit anderen Worten die gemessene Distanz würde um 16 cm von der vorgegebenen Distanz abweichen. Es ist ferner denkbar, dass eine andere beliebige vorgegebene Distanz gewählt wird, wie beispielsweise 2 m oder 3 m oder 1 m, und nach einer gewissen Zeit, welche länger oder auch kürzer als 15 Minuten sein kann, eine gemessene Distanz erfasst wird, welche von der vorgegebenen Distanz abweichen kann. Eine solche Abweichung kann mit dem vorgeschlagenen Korrigieren automatisch korrigiert werden.

Bevorzugt ist die Anordnung dazu ausgebildet, die Sende Signalstärke für eine Anzahl an Sende Signalstärken und/oder die Frequenzdifferenz für eine Anzahl an Frequenzdifferenzen zu verändern, dass basierend auf den gemessenen Sende Signalstärken und/oder den gemessenen Frequenzdifferenzen und der gemessenen Distanz eine Anzahl an Korrekturwerten berechnet werden, um eine Korrekturkurve bereitzustellen. Dadurch, dass die Anordnung dazu ausgebildet ist, eine Anzahl an Korrekturwerten zu bestimmen, kann eine Korrekturkurve, insbesondere automatisch, erstellt werden. Eine solche Korrekturkurve kann bei weiteren Distanzmessungen herangezogen werden, bei welche die automatische Fehlerkorrektur als solche nicht mehr durchgeführt werden muss. Dies bedeutet, dass bevorzugt eine automatische Fehlerkorrektur bei einer ersten Anwendung der Anordnung durchgeführt wird. Es ist ferner denkbar, eine automatische Fehlerkorrektur mit der vorgeschlagenen Anordnung durchzuführen, wenn diese von einem Nutzer verlangt wird.

Bevorzugt ist die Anordnung dazu ausgebildet, die Korrekturkurve in einem Speicher zu speichern. Der Speicher ist bevorzugt ein lesbarer und/oder beschreibbarer Speicher. Aus einem solchen Speicher kann die hinterlegte Korrekturkurve bei Bedarf abgerufen und ausgewertet werden. Eine Auswertung der Korrekturkurve bezieht sich insbesondere auf das Auffinden eine Korrekturwertes, mit welchem eine gemessene Distanz korrigiert werden kann. Ferner kann der Speicher mit einer neu aufgezeichneten Korrekturkurve überschrieben werden.

Bevorzugt dient die Korrekturkurve im Betrieb der Anordnung bei einer Erfassung einer Frequenzdifferenz und einer empfangenen Signalstärke zum Auffinden des entsprechenden Korrekturwertes, um die gemessene Distanz zu korrigieren. Bei der gemessenen Distanz, welche zu korrigieren ist, kann es sich dabei um eine gemessene Distanz handeln, welche widerholt konstant messbar ist, insbesondere nach Ablauf einer gewissen Zeit konstant messbar ist. Dadurch, dass die Korrekturkurve in dem Speicher gespeichert werden kann und bei Bedarf zum Auffinden eines Korrekturwertes ausgewertet werden kann, ist die Zeitdauer zur Bestimmung einer genauen Position oder einer genauen Distanz reduziert. Mit anderen Worten eine Positionsbestimmung oder eine Distanzmessung kann schneller und genauer durchgeführt werden.

Bevorzugt ist die Anordnung dazu ausgebildet, bei einer Distanzmessung die Frequenzdifferenz zwischen den mindestens zwei Transceivern auf einen vorbestimmten Wert zu regeln, insbesondere zu verringern. Das Regeln auf einen vorbestimmten Wert kann auch als Trimmen bezeichnet werden. Bevorzugt kann beim Regeln der Frequenzdifferenz auf einen vorbestimmten Wert, eine Signalstärkekorrektur vorgenommen werden, falls erforderlich.

Bevorzugt ist die Anordnung dazu ausgebildet, bei einer Regelung der Frequenzdifferenz auf den vorbestimmten Wert, eine Korrektur der Signalstärke vorzunehmen. Nach einer Korrektur der Signalstärke kann durch die Anordnung eine gemessene Distanz korrigiert werden. Die Signalstärkekorrektur ist von einem Setzen des Zeitstempels abhängig. Denn der Zeitstempel eines DecaWave® Systems, wie beispielsweise dem DW1000, ist von der Signalleistung beeinflusst, wobei eine Erhöhung der Signalleistung eine negative Verschiebung des Zeitstempels bewirkt und eine Erniedrigung der Signalleistung eine positive Verschiebung des Zeitstempels bewirkt. Die Korrekturkurve also solche ist von den Elementen des DecaWave® Systems abhängig. Insbesondere kann die Korrekturkurve von Parametern wie z.B. der gedruckten Schaltung, der Antennenverstärkung oder der Pulswiederholungsfrequenz (PRF) abhängig sein. Der allgemeine Ansatz, um eine Schätzung zur Korrekturkurve zu erhalten, besteht darin, die gemessenen Distanzen zwischen den Transceivern mit den wahren Distanzen der Transceiver am Boden (Engl.: ground truth distances) zu vergleichen. Bei diesem Ansatz wird einerseits kein zusätzliches Equipment benötigt und andererseits bezieht sich die damit ermittelte Signalstärkekorrektur auf jeden verwendeten Transceiver individuell.

Ein weiterer Aspekt der vorliegenden technischen Lehre betrifft ein Verfahren zum Ausführen einer automatischen Fehlerkorrektur bei einer Distanzmessung zwischen zwei Transceivern, wobei die mindestens zwei Transceiver zum Senden und/oder Empfangen eines Signals ausgebildet sind und wobei die mindestens zwei Transceiver eine vorgegebene Distanz voneinander beabstandet angeordnet sind. Das Verfahren umfasst ein Messen einer Distanz zwischen den mindestens zwei Transceivern mittels Zweiwege-Entfernungsmessung (two-way-ranging /TWR) in Abhängigkeit einer Sende-Signalstärke und einer Frequenzdifferenz des Signals. Die gemessene Distanz ist dabei bevorzugt eine vorgegebene Distanz. Das Verfahren umfasst bei der Distanzmessung die Frequenzdifferenz zwischen den mindestens zwei Transceivern auf einen vorbestimmten Wert zu regeln. Das Verfahren umfasst ferner ein Einstellen einer Sende-Signal-stärke und einer Frequenzdifferenz des Signals, wodurch ein Wert der gemessenen Distanz verändert wird. Ferner umfasst das Verfahren ein Berechnen eines Korrekturwertes basierend auf der gemessenen Signalstärke, der gemessenen Frequenzdifferenz und der gemessenen Distanz, und ein Korrigieren der gemessenen Distanz basierend auf dem ermittelten Korrekturwert. Auf die Ausführungen zu den bevorzugten Ausführungsformen der vorgeschlagenen Anordnung wird an dieser Stelle Bezug genommen. Es versteht sich von selbst, dass die detaillierten Ausführungen, welche im Zusammenhang mit der vorgeschlagenen Anordnung beschrieben sind, unmittelbar auf das vorgeschlagene Verfahren übertragbar sind und umgekehrt.

Bevorzugt weist das Verfahren zum Durchführen desselben zum Ermitteln der gemessene Distanz die mindestens zwei Transceiver in einer bekannten vorgegebenen Distanz zueinander auf, wobei die gemessene Distanz von der bekannten vorgegebenen Distanz abweicht. Zum Durchführen des vorgeschlagenen Verfahrens werden die mindestens zwei Transceiver in einer vorbestimmten Distanz zueinander beabstandet angeordnet. Während des Durchführens des Verfahrens wird die bekannte Distanz gemessen, um eine gemessene Distanz zu erhalten. Die gemessene Distanz kann von der bekannten vorgegebenen Distanz abweichen. Eine solche Abweichung kann auf die Konstruktion der Hardware der Anordnung zurückgeführt werden, welche zum Ausführen des Verfahrens genutzt wird. Ein Absolutwert der Abweichung ist für das Ausführen des Verfahrens mittels der vorgeschlagenen Anordnung nicht von Bedeutung, da die erfasste Abweichung im Wesentlich konstant ist, insbesondere nach Ablauf von etwa fünfzehn Minuten. Bevorzugt wird bei dem vorgeschlagenen Verfahren die Sende Signalstärke für eine Anzahl an Sende Signalstärken und/oder die Frequenzdifferenz für eine Anzahl an Frequenzdifferenzen verändert, so dass basierend auf den gemessenen Sende Signalstärken und/oder den gemessenen Frequenzdifferenzen und der zugehörigen gemessenen Distanz eine Anzahl an Korrekturwerten berechnet werden kann, um eine Korrekturkurve bereitzustellen. Bevorzugt wird nach Einstellen eines Paares bestehend aus einer Sende Signalstärke und einer Frequenzdifferenz die zu messende Distanz, d.h. die gemessene Distanz, bestimmt. Aus den berechneten Korrekturwerten kann eine Korrekturkurve bestimmt werden, welche beispielsweise durch Interpolation einer beliebigen Ordnung als stetige Funktion darstellbar sein kann. Es ist auch denkbar, die Korrekturwerte linear zu verbinden. Die Art der Interpolation der Korrekturkurve kann insbesondere abhängig von einer Streuung der erfassten und berechneten Korrekturwerten abhängen.

Bevorzugt wird die Korrekturkurve in einem Speicher gespeichert. Ein Speichern der Korrekturkurve wird bevorzugt bei einem erstmaligen Ausführen des Verfahrens vorgenommen. Eine gespeicherte Korrekturkurve kann dann bei Bedarf abgerufen werden und entsprechend ausgewertet werden, um einen Korrekturwert für eine gemessene Distanz zu bestimmen, um die gemessene Distanz zu korrigieren. Bei Bedarf oder, wenn ein Nutzer diese veranlasst, kann eine Korrekturkurve neu erfasst werden und in dem Speicher gespeichert werden.

Bevorzugt wird im Betrieb der Anordnung bei einer Erfassung einer Frequenzdifferenz und einer empfangenen Signalstärke die Korrekturkurve zum Auffinden des entsprechenden Korrekturwertes ausgewertet, um die gemessene Distanz zu korrigieren. Das Erfassen einer Korrekturkurve ist nur bei einem erstmaligen Durchführen des vorgeschlagenen Verfahrens notwendig. Es ist natürlich denkbar, ein Bestimmen einer Korrekturkurve auch nach einem erstmaligen Ausführen des Verfahrens durchzuführen, um beispielsweise die Korrekturkurve zu validieren oder um eine neue Korrekturkurve zu bestimmen, insbesondere dann, wenn sich ein Abstand der mindestens zwei Transceivern zueinander verändert hat oder wenn die Transceiver sich in einem Medium befinden, welches einen Einfluss auf die Ausbreitungsgeschwindigkeit der transmittierten Signale zwischen den Transceivern haben könnte.

Bevorzugt wird bei einer Distanzmessung die Frequenzdifferenz zwischen den mindestens zwei Transceivern auf einen vorbestimmten Wert geregelt. Insbesondere wird die Frequenzdifferenz verringert. Bevorzugt wird bei einer Regelung der Frequenzdifferenz auf den vorbestimmten Wert eine Korrektur der Signalstärke vorgenommen. Nach einer Korrektur der Signalstärke kann eine gemessene Distanz korrigiert werden.

Ein weiterer Aspekt der vorliegenden technischen Lehre betrifft ein Computerprogramcode, welcher eine Ausführungsform des vorgeschlagenen Verfahrens ausführt, wenn der Computerprogramcode auf einem Computercode ausführbaren Medium ausgeführt wird. insbesondere wird der Computerprogramcode auf einer hierin vorgeschlagenen Anordnung ausgeführt. Die mindestens zwei Transceiver können beispielsweise ein den Computercode ausführbares Medium sein.

Vorliegend ist unter dem Begriff Transceiver eine Vorrichtung zu verstehen, welche ein Signal aussenden und/oder Empfangen kann. Der Begriff Transceiver wird vorliegend auch als Referenzstation oder als Station bezeichnet. Diese Begriffe werden synonym zueinander in der vorliegenden Anmeldung verwendet. Unter einem Transceiver ist ferner auch ein Sender oder ein Empfänger zu verstehen, welche beispielsweise als Antenne ausgebildet sein können.

Vorliegend wurde eine Anordnung und einer Verfahren offenbart, mit welcher bzw. mit welchem eine automatische Fehlerkorrektur durchführbar ist. Durch die automatische Fehlerkorrektur wird eine Korrekturkurve in Bezug zu einer Zweiwege-Entfernungsmessung (TWR) erhalten. Mit der vorgeschlagenen Anordnung ist es möglich, eine Genauigkeit von unter 1 cm zu erhalten. Die höhere Genauigkeit würde einen Einsatz der vorgeschlagenen Anordnung in weiteren Anwendungsgebieten möglich machen, wie beispielsweise in der Tomografie oder der Navigation etc.. Die vorgeschlagene Anordnung bzw. das vorgeschlagene Verfahren bietet damit eine technische Weiterentwicklung gegenüber dem Stand der Technik. Mit der vorgeschlagenen technischen Lehre kann zudem gezeigt werden, dass der auch als Warm-Up-Fehler bekannt Fehler durch die gleiche Fehlerquelle beeinflusst wird wie die Signalleistung. Die vorgeschlagene Anordnung präsentiert eine Lösung, die keine externe Messausrüstung erforderlich macht und die nur einmal ausgeführt werden muss. Mit der vorgeschlagenen technischen Lehre kann gezeigt werden, dass die empirisch erhaltene Warm-Up-Korrektur-Kurve, hierin auch als Korrektur-kurve bezeichnet, die Genauigkeit für die Zweiwege-Entfernungsmessung (TWR; TWR = Two-Way-Ranging) erheblich erhöht.

Kurzbeschreibung der Zeichnungen

Die Zeichnungen sind nicht unbedingt maßstabsgerecht; vielmehr wird im Allgemeinen darauf Wert gelegt, die Prinzipien der Erfindung zu veranschaulichen. In der folgenden Beschreibung werden verschiedene Ausführungsformen der Erfindung mit Bezug auf die folgenden Zeichnungen beschrieben. Es zeigen:

Fig. 1     eine schematische Zweiwege-Entfernungsmessung, wobei ein Zeitstempel eines Transceivers einen hochgestellten Index R und der eines Tags eines weiteren Transceivers den Index T hat;

Fig. 2     Schema der Zweiwege-Entfernungsmessung mit drei Nachrichten zwischen der Referenzstation und dem Tag, bzw. den mindestens zwei Transceivern, wobei die Zeitstempel der Referenzstation den hochgestellten Index R und des Tags den Index T haben und eine Verschiebung des Zeitstempels, die durch die Signalleistung verursacht wird, mit $E_1$ und $E_2$ gekennzeichnet ist;

Fig. 3     einen Aufbau der vorgeschlagenen Anordnung mit zwei Transceivern, die an einem Stativ befestigt sind;

Fig. 4     eine typische Distanzmessung in Metern [m] über die Zeit in [min], welche beispielsweise durch das sog.

AltDS-TWR-Protokoll ermittelt wurde;

Fig. 5 Ergebnisse eines ersten Experiments mit gemessener Distanz und Signalleistung in [dBm] der Referenzstation [Ref.] und des Tags, wobei die gestrichelten Linien die empfangene gemessene Leistung an der Tag-Station und die reguläre Linie die die empfangene gemessene Leistung an der Referenzstation darstellen;

Fig. 6 Ergebnisse des ersten Experiments mit Distanzänderungen zwischen den Transceivern von einem Meter bis zu zwei Metern, wobei die gezeigten Kurven den sog. Warm-Up-Fehler über die Zeit für unterschiedliche Distanzen darstellen;

Fig. 7 Ergebnisse eines zweiten Experiments, wobei die Kurven die Messungen von (a) Frequenzdifferenzen in ppm, (b) empfangener Signalleistungen und (c) Warm-up-Fehlern für unterschiedliche Übertragungsverstärkungen darstellen;

Fig. 8 Ergebnisse eines vierten Experiments mit sich änderndem Kristalltrimmen über die Zeit, wobei im Diagramm (a) die gemessene Frequenzdifferenz in ppm, im Diagramm (b) die empfangene Signalleistung und im Diagramm (c) der Warm-Up-Fehler dargestellt ist;

Fig. 9 Ergebnisse eines dritten Experiments, wobei die Kurven die Messungen der Frequenzdifferenz für unterschiedliche Übertragungsverstärkungen darstellen;

Fig. 10 Ergebnisse eines fünften Experiments, welches die Beziehung zwischen der Signalleistung-Korrekturkurve und den erhaltenen Distanzmessungen darstellt;

Fig. 11 eine schematische Darstellung eines LED Algorithmus, wobei A: ein Idealfall, B: hohe Signalleistung, C: niedrige Signalleistung, D: hohe Signalleistung und geringe Frequenzdifferenz darstellen;

Fig. 12 den Warm-Up-Fehler während des dynamischen Trimmens;

Fig. 13 eine Korrekturkurve, wobei die gemessene Distanz in [m] und bezogen auf die Frequenzdifferenz [PPM] und die empfangene Signalleistung [dBm] dargestellt ist;

Fig. 14 eine Korrekturkurve, wobei eine Interpolation der Kurve mit Übertragungssignalverstärkung von 0 dBm dargestellt ist;

Fig. 15 eine Validierung der Korrekturkurve mit kleiner Frequenzdifferenz, wobei die Veränderung der empfangenen Signalleistung bezogen auf die Zeit gezeigt ist;

Fig. 16 eine Validierung der Korrekturkurve mit kleiner Frequenzdifferenz, wobei Fig. 16 (a) den Warm-Up-Fehler mit und ohne Verwendung der Korrekturkurve und Fig.16(b) den absoluten Warm-Up-Fehler zeigt;

Fig. 17 eine Validierung der Korrekturkurve mit hoher Frequenzdifferenz, wobei Fig. 17(a) die Frequenzdifferenz und Fig. 17(b) die Veränderung der empfangenen Signalleistung bezogen auf die Zeit zeigt;

Fig. 18 eine Validierung der Korrekturkurve mit hoher Frequenzdifferenz. Diagramm (a) zeigt den Warm-Up-Fehler mit und ohne Verwendung der Korrekturkurve und (b) den absoluten Warm-Up-Fehler und

Fig. 19 ein Ablaufschema eines vorgeschlagenen Verfahrens.

## Detaillierte Beschreibung der Ausführungsformen

Gleiche oder gleichwertige Elemente oder Elemente mit gleicher oder gleichwertiger Funktionalität werden in der folgenden Beschreibung durch gleiche oder gleichwertige Referenzzahlen bezeichnet, auch wenn sie in verschiedenen Figuren vorkommen.

In der folgenden Beschreibung wird eine Vielzahl von Details aufgeführt, um eine durchgehende Erläuterung von Ausführungsformen der vorliegenden Erfindung zu ermöglichen. Für einen Fachmann wird es jedoch offensichtlich sein, dass Ausführungsformen der vorliegenden Erfindung auch ohne diese spezifischen Details ausgebildet werden können. In anderen Fällen werden bekannte Strukturen und Vorrichtungen eher in Blockschaltbildern oder schematischen Darstellungen als im Detail dargestellt, um zu vermeiden, dass Ausführungsformen der vorliegenden technischen Lehre verdeckt werden. Darüber hinaus können Merkmale der verschiedenen nachfolgend beschriebenen Ausführungsformen miteinander kombiniert werden, sofern nicht ausdrücklich anders angegeben ist.

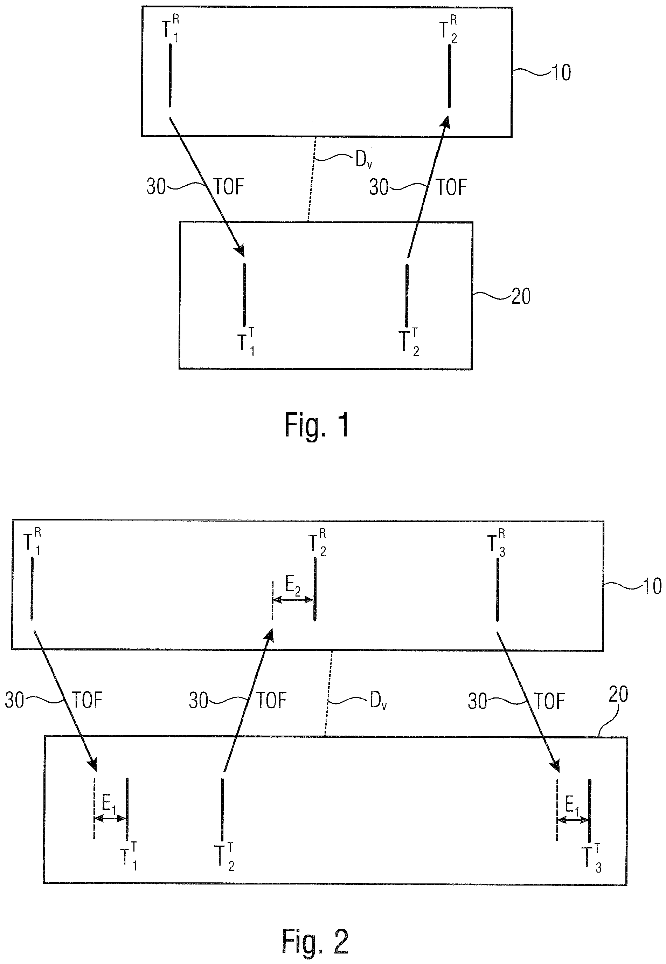

Das Protokoll der Zweiwege-Entfernungsmessung (TWR) zählt zu den Ankunftszeit-Messtechniken (TOA-Messtechniken; TOA = Time of Arrival) [20]. Sein Zweck besteht in der Bereitstellung von Distanzmessungen zwischen zwei Transceivern, selbst wenn diese nicht synchronisiert sind. In Fig. 1 wird das Konzept der TWR zwischen zwei Stationen oder zwei Transceivern 10, 20, nämlich einer Referenz 10 und einem Tag 20, präsentiert. Die Referenzstation 10 leitet den Entfernungsmessprozess durch Senden einer Nachricht zu der lokalen Zeit $T_1^R$ ein. Das Tag 20 empfängt die Nachricht zu seiner lokalen Zeit $T_1^T$ und sendet zu der Zeit $T_2^T$ eine Antwortnachricht zurück an die Referenzstation 10. Die Flugzeit 30 (TOF; TOF = Time of Flight) $\mathrm{TOF} = 0{,}5 \cdot (\Delta T_{1,2}^R - \Delta T_{1,2}^T)$ kann erhalten werden durch Subtrahieren der Antwortzeit $\Delta T_{1,2}^T = (T_2^T - T_1^T)$ von der Sende- und Empfangszeitdifferenz $\Delta T_{1,2}^R = (T_2^R - T_1^R)$ der Referenzstation 10. Aufgrund kleiner Fehlstellen sind die Frequenzen der Kristalle nicht identisch. In [14] wurde ein Taktdrift-Korrekturprotokoll auf Basis von drei Nachrichten präsentiert, genannt AltDS-TWR. Dieses Protokoll besitzt einen kleinen Restfehler, der nur von der TOF 30 abhängt. Aus Gründen der Vollständigkeit soll hier erwähnt werden, dass es ein alternatives Protokoll mit dem gleichen Restfehler gibt [11]. Dieses alternative Protokoll ist jedoch eng verbunden mit der Phasenregelschleife (PLL), wobei in [21] gezeigt werden konnte, dass die PLL durch die Signalleistung beeinflusst ist. Um wechselseitige Abhängigkeiten zwischen den Fehlern zu vermeiden, wird vorliegend daher vorgeschlagen, das AltDS-TWR-Protokoll zu verwenden.

Fig. 2 zeigt ein Schema der Zweiwege-Entfernungsmessung mit drei Nachrichten 40 zwischen der Referenzstation 10 und dem Tag 20, bzw. den mindestens zwei Transceivern 10, 20, wobei die Zeitstempel T der Referenzstation 10 den hochgestellten Index R und des Tags den Index T haben und eine Verschiebung des Zeitstempels, die durch die Signalleistung verursacht wird, mit $E_1$ und $E_2$ gekennzeichnet ist. Fig. 2 stellt die Art und Weise des Arbeitens mit diesem Protokoll dar. Die ersten Schritte entsprechen Fig. 1, wobei der einzige Unterschied darin besteht, dass die Referenzstation 10 eine dritte Nachricht zu ihrer lokalen Zeit $T_3^R$ sendet, die auch durch das Tag 20 zu der lokalen Zeit $T_3^T$ empfangen wird. Ohne Taktdrift bzw. Clock Drift zwischen den beiden Stationen 10, 20 ist die Zeitdifferenz $\Delta T_{1,3}^R = (T_3^R - T_1^R)$ gleich $\Delta T_{1,3}^T = (T_3^T - T_1^T)$. Falls dies nicht der Fall ist, ist es möglich, den Taktversatz linear zu interpolieren, um die Entfernungsmess-Zeitstempel zu korrigieren. Ein weiterer Unterschied zwischen den Figs. 2 und 1 ist die Verschiebung $E_1$, $E_2$ und $E_3$ des Zeitstempels, die durch die Signalleistung verursacht wird. In [21] konnte beispielsweis gezeigt werden, dass es möglich ist, automatisch eine Korrekturkurve zwischen der empfangenen Signalleistung und der Zeitstempelverschiebung zu erzeugen. Vorher bestand die gängige Technologie darin, eine Korrekturkurve basierend auf der Distanzmessung und der Ground Truth-Distanz (Bodenwahrheit-Distanz) oder der vorgegebenen Distanz zu verwenden. Die Verschiebung des Zeitstempels beeinflusst die Zeitstempel $T_1^T$ und $T_3^T$ gleichermaßen, und zwar unter der Annahme, dass sich die Stationen 10, 20 während dieses Nachrichtenaustauschs von etwa einer Millisekunde nicht bewegen. Die gleiche Verschiebung beider Zeitstempel hat den Vorteil, dass die Signalleistung die Taktdrift-Korrektur nicht beeinflusst. Die Hardware-Verzögerung hängt hauptsächlich von der Temperatur ab und kann vor der Entfernungsmessung geschätzt werden [8]. Eine Taktdrift-Korrektur kann vorliegend vernachlässigt werden, da die Temperatur beim Durchführen eines vorgeschlagenen Verfahrens bzw. der Anwendung der vorgeschlagenen Anordnung als konstant angenommen werden kann, insbesondere nach etwa fünfzehn Minuten.

Bisher wurde die gut untersuchte Taktdrift-Korrektur erläutert. Nachfolgend wird auf den oft vernachlässigten sog. Warm-Up- bzw. Aufwärmfehler eingegangen. Im Detail wird nachfolgend auf Experimente eingegangen, welches es erlauben, Rückschlüsse über die Quelle des Warm-Up-Fehlers zu bilden.

Die Experimente sind wie folgt strukturiert.

1) Das erste Experiment überprüft, ob es eine Abhängigkeit zwischen der Distanz und dem Warm-Up-Fehler gibt.
2. Das zweite Experiment überprüft, ob die sich verändernde Übertragungsverstärkung den Warm-Up-Fehler bewirkt.
3. Das dritte Experiment überprüft, ob die Übertragungsverstärkung eine Auswirkung auf die Frequenzdifferenz hat.
4. Bei dem vierten Experiment wird die Frequenzdifferenz getrimmt, um die Effekte der Frequenzdifferenz auf die empfangene Signalleistung und den Warm-Up-Fehler zu analysieren.
5. Bei dem fünften Experiment wird die Frequenzdifferenz getrimmt, wie auch die Übertragungsverstärkung, um zu zeigen, wie beide Parameter den Warm-Up-Fehler beeinflussen.

Der Abschnitt "*G. Interpretationen der Ergebnisse*" fasst die Ergebnisse zusammen und bietet eine Erläuterung für die Beobachtungen. Dieser Abschnitt erscheint erst nach den Experimenten, da es, wenn die erhaltenen Abhängigkeiten deterministisch und messbar sind, möglich ist, eine empirische Korrekturkurve zu liefern, die durch die hierin beschriebene automatische Fehlerkorrektur erhalten werden kann, wie im Abschnitt "*B. Korrekturkurve*" gezeigt ist. Dies trifft auch auf den Fall zu, bei dem nicht alle Beobachtungen explizit erklärt werden können.

*A. Aufbau und typische Distanzmessung*

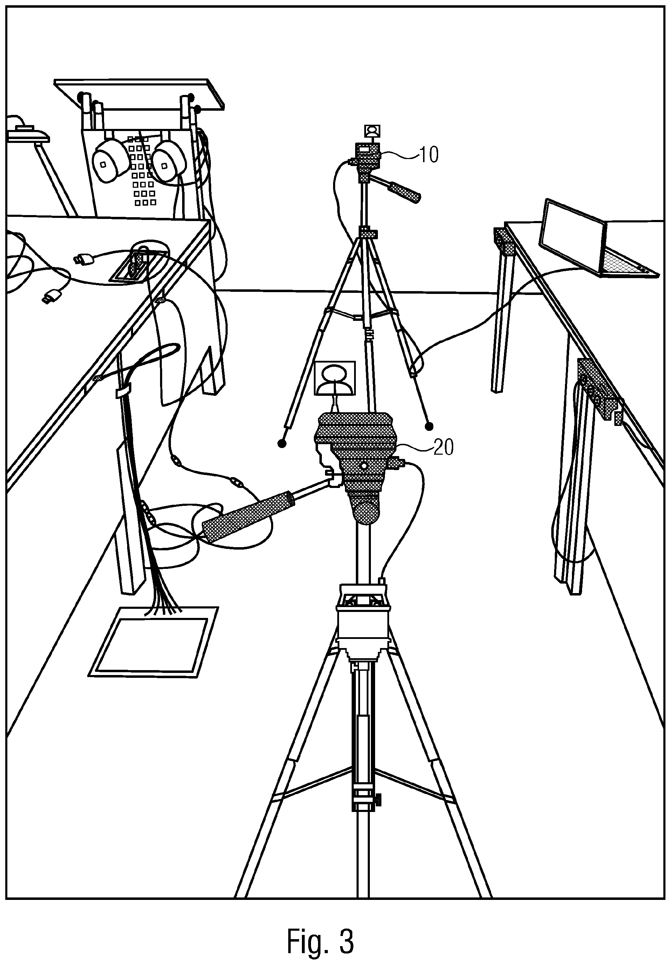

In Fig. 3 wird der experimentelle Aufbau mit zwei Stationen 10, 20 präsentiert. Bei allen hierin beschriebenen Experimenten haben die Stationen 10, 20 beispielsweise eine Distanz von 1,5 m oder dergleichen zueinander. In den nachfolgenden Figuren werden die gefilterten Werte präsentiert, wobei, wenn nicht anderweitig angegeben, ein Filter mit gleitendem Mittelwert mit einer Filtergröße von 500 Messungen eingesetzt wurde. Die Filterfenstergröße von 500 Messungen wurde ohne bestimmten Grund ausgewählt und kann auch anders gewählt werden. Die Distanzmessungen wurden alle mit dem AltDS-TWR-Protokoll, das zuvor beschrieben wurde, mit der Hardware, die ebenfalls zuvor beschrieben wurde, erhalten. Die Signalleistung wurde an der Referenzstation 10 gemessen.

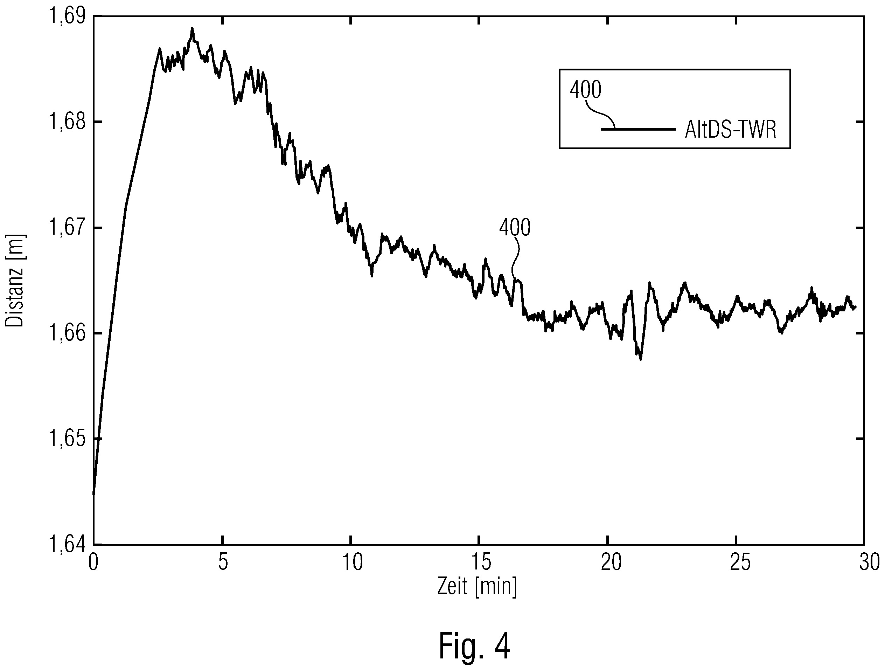

In Fig. 4 zeigt eine typische Kurve der Distanzmessungen 400 als Funktion der Zeit, wobei die Distanzmessung mit dem AltDS-TWR Protokoll ausgeführt wurde. Ein Wiederholen des Experiments mit den gleichen Stationen 10, 20 und dem gleichen Aufbau würde zu der gleichen Form der Kurve führen. Es ist zu beobachten, dass es bis zu 15 Minuten dauert, bis die Kurve einen konstanten Wert erreicht. Die Differenz zwischen dem letztendlich erreichten Wert, der ersten gemessenen Distanz $D_1$, und der Ground Truth-Distanz, bzw. der vorgegebenen Distanz $D_v$, von 1,5 m ist der Hardware-Verzögerung geschuldet. Diese Differenz ist aufgrund der Tatsache irrelevant, dass sie als konstant angenommen werden kann. Bei einer gemessenen Distanz $D_1$=1,66m und einer vorgegebenen Distanz von $D_v$=1,5m ergibt sich ein konstanter Fehler von 16 cm. Eine mögliche Erklärung dafür, warum die Kurve in Fig. 4 nicht von Anfang an waagerecht verläuft, könnte durch die Veränderung der Referenzstationsfrequenz verursacht sein. Der Restfehler des AltDS-TWR-Protokolls hängt von der TOF 30, multipliziert mit der Frequenzänderung der Referenzstation 10, ab. Das verwendete DecaWave® EVK1000 System wird durch einen RSX-10 Rakon SMD-Quarzoszillator mit einer Toleranz von 10 ppm bis 50 ppm [22] betrieben. Die TOF 30 multipliziert mit der maximalen Veränderung des Quarzoszillatorversatzes jedoch ist zu klein, um einen Fehler von 3 cm zu verursachen. Deshalb kann angenommen werden, dass die Quelle dieses Fehlers nicht das AltDS-TWR-Protokoll ist. In [10] wird angeführt, dass der Fehler zu Beginn durch das Aufwärmen des Quarzoszillators, nachdem dieser aktiviert wurde, verursacht wird. Dies würde bedeuten, dass dieser Fehler später in dem Entfernungsmessvorgang nicht auftauchen sollte und unabhängig von der Distanz ist. Diese Frage führt zu dem ersten hierin beschriebenen Experiment.

*B. Erstes Experiment: Distanz und Warm-Up-Fehler*

Bei dem ersten Experiment wird die vorgegebene Distanz $D_v$ zwischen der Referenzstation 10 und dem Tag 20 schrittweise von einem Meter bis drei Meter verändert. Die Daten werden 30 Minuten lang erfasst und jede Distanzmessung 400 wird von dem zuletzt gemessenen Wert subtrahiert, da der Fokus auf der Veränderung über die Zeit liegt. Die subtrahierten Distanzmessungen werden vorerst als Warm-Up-Fehler bezeichnet. Nach jeder Messung wird das Bauelement zehn Minuten lang vom Strom getrennt.

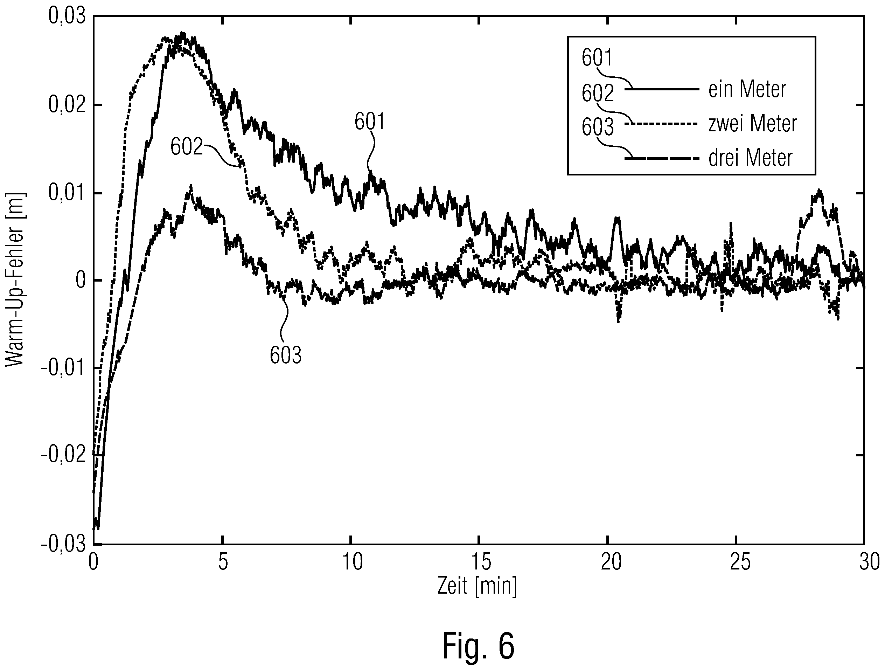

Fig. 6 zeigt die Ergebnisse des ersten Experiments. Die Kurve 601 zeigt den Warm-Up-Fehler bei einer Distanz von einem Meter, die Kurve 602 bei zwei Metern und die Kurve 603 bei drei Metern. Es ist zu beobachten, dass der Fehler zu Beginn der Messung von der gemessenen Distanz abhängt. Dies steht im Widerspruch zu der Annahme, dass dieser Fehler einfach durch das Aufwärmen des Quarzoszillators verursacht ist. Eine Erklärung könnte der Einfluss der Signalleistung aufgrund der Veränderung über die Zeit sein.

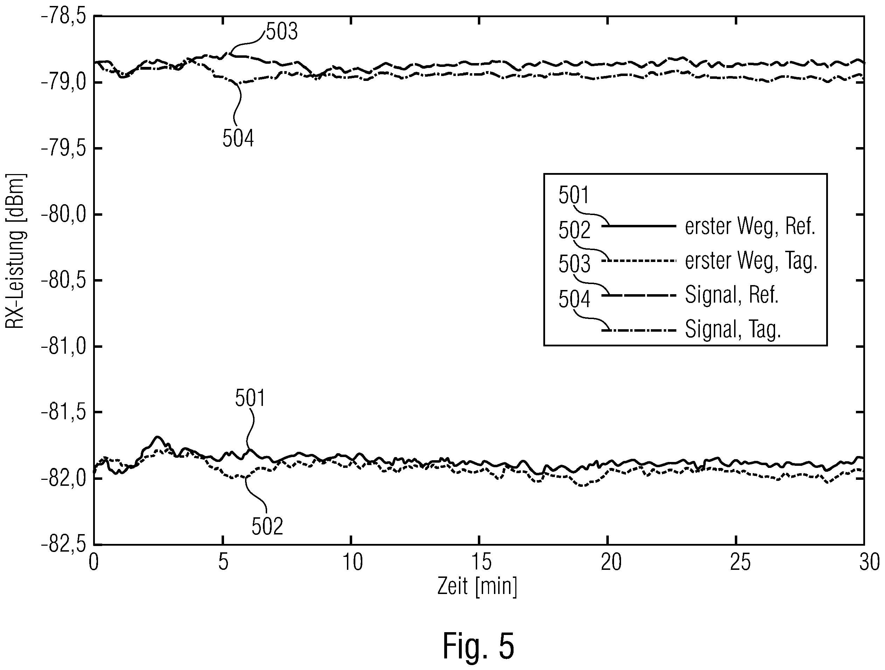

Fig. 5 zeigt einen ersten aufgenommenen Weg (first path FP) 501, 502 und eine Signalleistung 503, 504 der Referenzstation 10 und des Tags 20, wobei der erste aufgenommene Weg FP 501, 502 eine zurückgelegte Wegstrecke eines Signals zwischen den Transceivern 10, 20 beschreibt. Es ist nicht zu beobachten, dass der gemessene erste Weg FP 501, 502 sowie die Signalleistung 503, 504 durch das Kristall-Aufwärmen beeinflusst sind. Die TOF 30 ist zu kurz, um diese Differenz zu verursachen, insbesondere weil der Fehler bei fünf Minuten für einen und für zwei Meter gleich ist (siehe Fig. 6). Deshalb ist das Ergebnis mit der Signalleistung verbunden.

*C. Zweites Experiment: Übertragungsverstärkung und Warm-Up-Fehler*

Bei diesem Experiment wird die Distanz zwischen der Referenzstation 10 und dem Tag 20 konstant bei beispielsweise 1,5 m gehalten, wobei nur die übertragene Signalleistung verändert wird. Äquivalent zu dem vorherigen Experiment werden die Stationen 10, 20 nach jedem Testfall zehn Minuten lang vom Strom getrennt und jede Messung wird von dem letzten Wert subtrahiert. Die Frequenzdifferenz zwischen den Stationen 10, 20 ist dargestellt durch

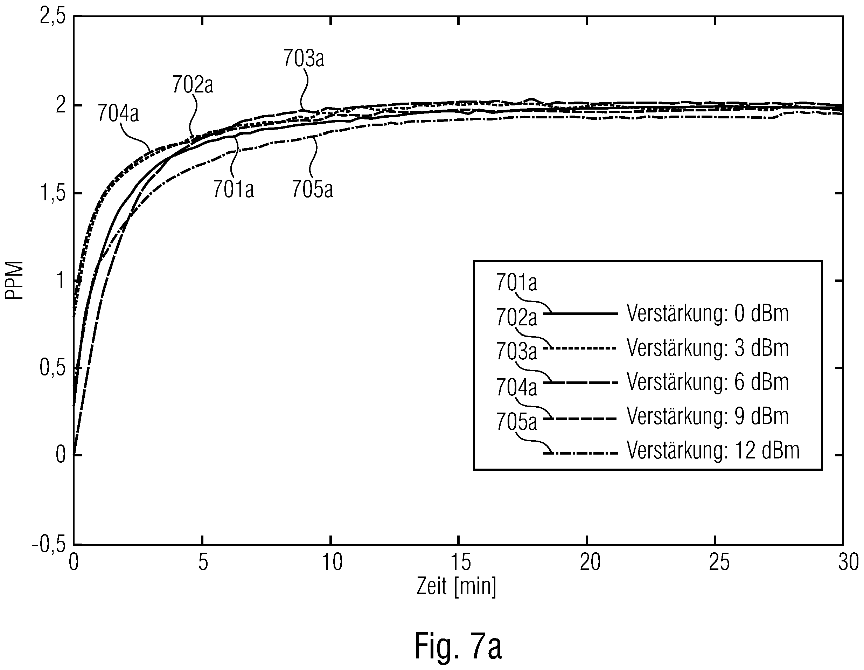

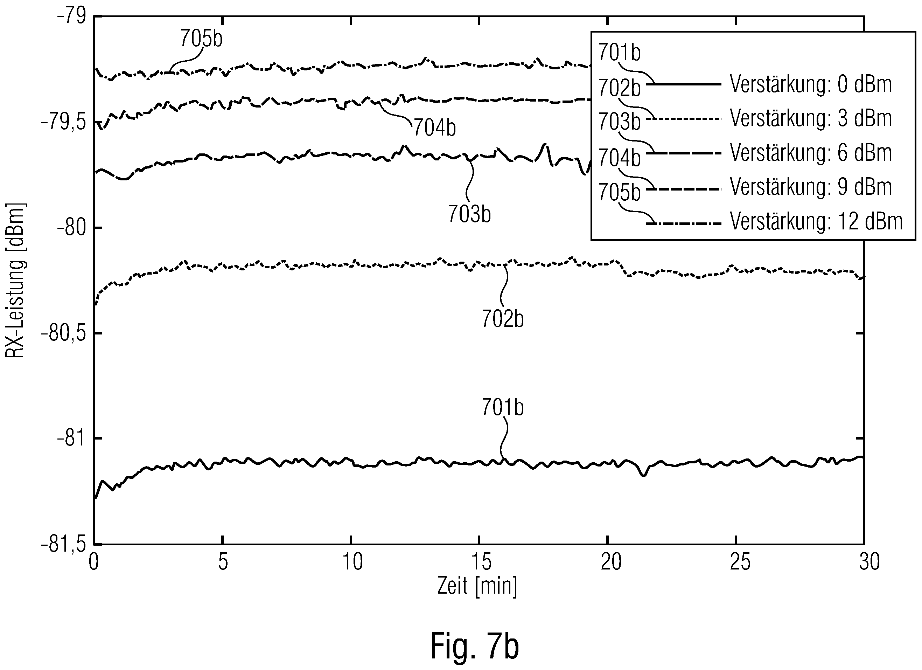

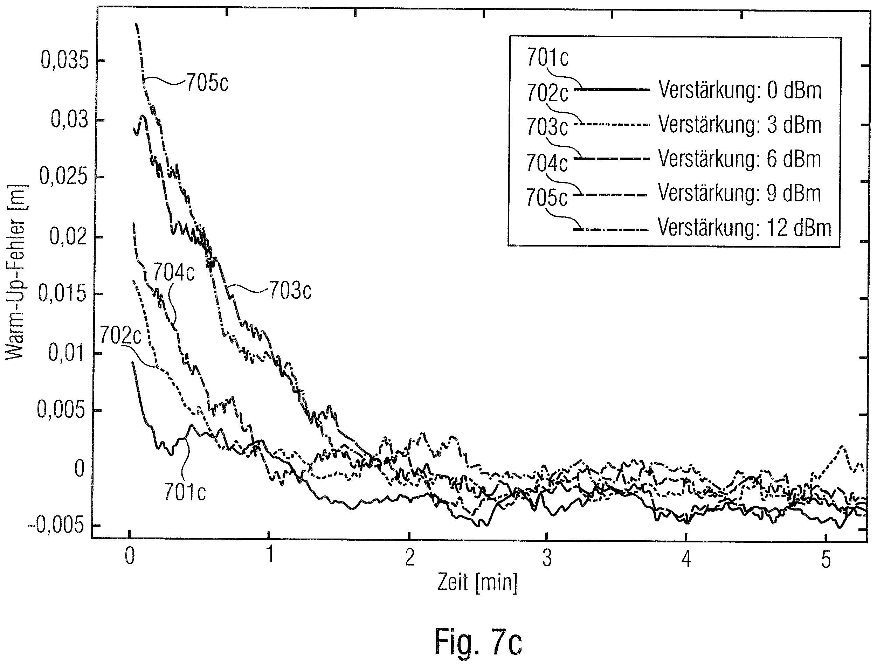

$\left(1-\frac{\Delta T_{1,3}^T}{\Delta T_{1,3}^R}\right)$ in Teilen je Million (PPM), wie in Fig. 7a gezeigt. Die Übertragungsverstärkung fiel von 12 dBm gemäß Kurve 705a mit einer Schrittgröße von 3 dBm auf 0 dBm gemäß Kurve 701a in Fig. 7a. Dementsprechend wurde die Kurve 704a mit 9dBm, die Kurve 703a bei 6 dBm und die Kurve 702a bei 3 dBm gemessen Die Übertragungsverstärkung sollte nicht mit der tatsächlichen übertragenen Signalleistung verwechselt werden. In Fig. 7 (b) ist die empfangene Signalleistung 701b gemessen bei 0 dBm, 702b gemessen bei 3 dBm, 703b gemessen bei 6 dBm, 704b gemessen bei 9 dBM, 705b gemessen bei 12 dBm dargestellt. Die gemessene Signalleistung unterscheidet sich von der tatsächlichen empfangenen Signalleistung mit ansteigender Signalstärke [10]. Die resultierende Frequenzdifferenz 701a, 702a, 703a, 704a, 705a und der Warm-Up-Fehler 701c, 702c, 703c, 704c, 705c sind in Fig. 7(a) und 7(c) gezeigt. Es ist zu erkennen, dass die Signalstärke Einfluss auf die gemessene Frequenzdifferenz und den Warm-Up-Fehler hat. Nachfolgend wird überprüft, ob diese wechselseitige Abhängigkeit nur in den ersten fünfzehn Minuten besteht.

*D. Drittes Experiment: Übertragungsverstärkung und Frequenzdifferenz*

Das Ziel des dritten Experiments besteht darin, Wissen über die Abhängigkeit zwischen der empfangenen Signalleistung und der Frequenzdifferenz zu gewinnen. Die TWR wird fünf Minuten lang ausgeführt. Die Zeitverzögerung von fünf Minuten ist ausreichend, um Veränderungen an den gemessenen Daten zu bemerken. Nachfolgend wird der Nachrichtenaustausch fünf Minuten angehalten und dann wieder fünf Minuten fortgesetzt.

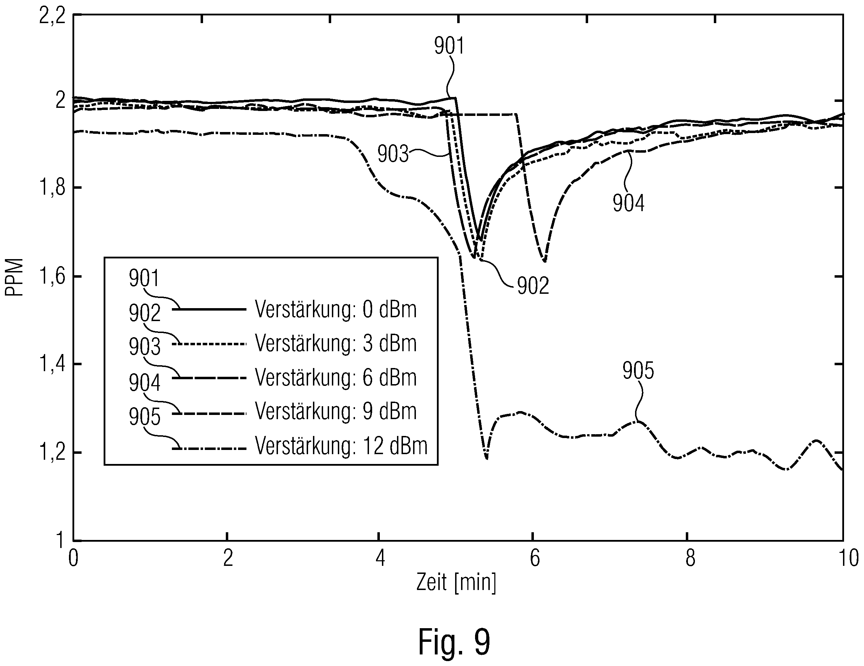

Während der gesamten Zeit sind die Transceiver 10, 20 mit der Stromversorgung verbunden. Dieser Test wurde mit unterschiedlichen Übertragungsverstärkungen wiederholt, äquivalent zu dem zweiten Experiment. Fig. 9 zeigt, dass die Nachrichtenunterbrechung eine Auswirkung auf die Frequenzdifferenz besitzt, die zwischen den Stationen 10, 20 gemessen wird. Für den Testfall mit einer Verstärkung von 12 dBm (Kurve 905) nähert sich die Frequenzdifferenz nach der Unterbrechung einem unterschiedlichen Wert an. An diesem Punkt soll nur herausgestellt werden, dass dieses Problem nicht nur die Anfangszeit betrifft. Die Kurve 904 wurde mit einer Verstärkung von 9 dBm erhalten. Die Kurve 903 wurde mit einer Verstärkung von 6 dBm erhalten. Die Kurve 902 wurde mit einer Verstärkung von 3 dBm erhalten. Die Kurve 901 wurde mit einer Verstärkung von 0 dBm erhalten. Die Kurven 901 bis 904 konvergieren hingegen nach der Unterbrechung gegen ein und demselben Wert.

*E. Viertes Experiment: Frequenzdifferenz, empfangene Signalleistung und Warm-Up-Fehler*

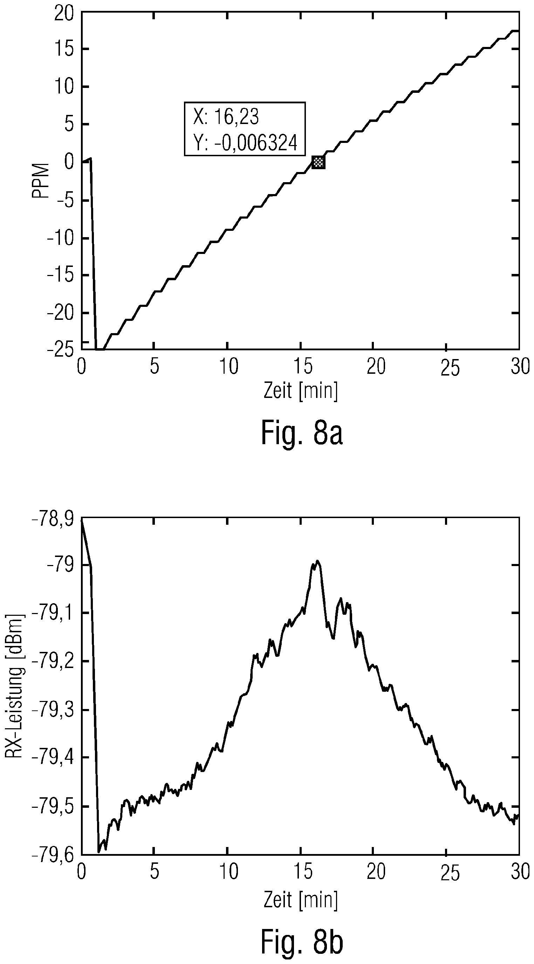

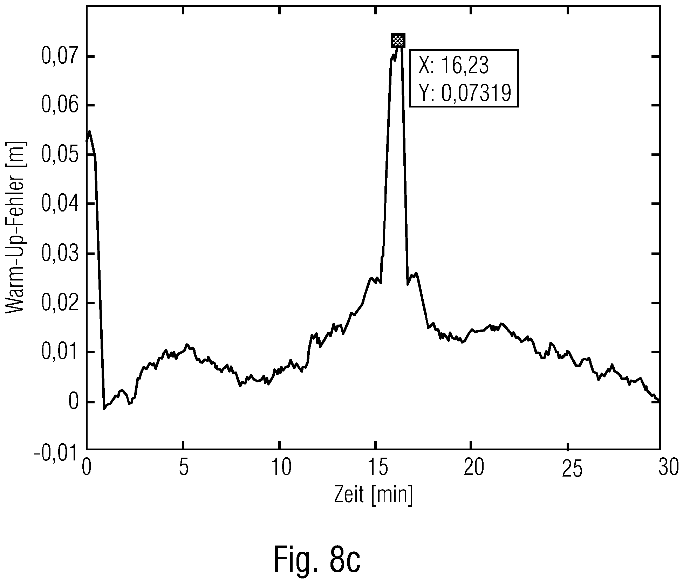

Die DecaWave® DW1000-IC erlaubt ein Mitteln der Trägerfrequenz durch Laden einer Kapazität auf den Quarzoszillator [9]. Das Trimmen wird verwendet, um die Empfängerempfindlichkeit zu erhöhen, indem die Frequenzdifferenz zwischen den Bauelementen minimiert wird. Bei diesem Experiment wird das Trimmen verwendet, um zu überprüfen, ob die Frequenzdifferenz den Warm-Up-Fehler beeinflusst. Die Entfernungsmessung bzw. Distanzmessung wird mit der Übertragungsverstärkung von 12 dBm durchgeführt. Fig. 8 (b) zeigt, dass, nachdem das Bauelement gestartet wurde, etwas Zeit verstreicht, bevor die Frequenzdifferenz dem anfänglichen Trimmwert entspricht. Nach 1000 Messungen wird der Trimmwert stufenweise verändert, bis der letztendliche Wert erreicht ist. In Fig. 8(a) ist zu sehen, dass die Signalleistung aufgrund der steigenden Empfindlichkeit des Transceivers ansteigt, je näher die Frequenzdifferenz (dargestellt in ppm) sich an null annähert. Bei etwa sechzehn Minuten ist die Frequenzdifferenz null am nächsten. Der Warm-Up-Fehler, in Fig. 8 (c) gezeigt ist, ist an diesem Punkt am höchsten. Es ist zu beobachten, dass die Veränderung über die Zeit am höchsten ist, je näher die Frequenzdifferenz bei null liegt.

*F. Fünftes Experiment: Frequenzdifferenz, sich verändernde Übertragungsverstärkung und Warm-Up-Fehler*

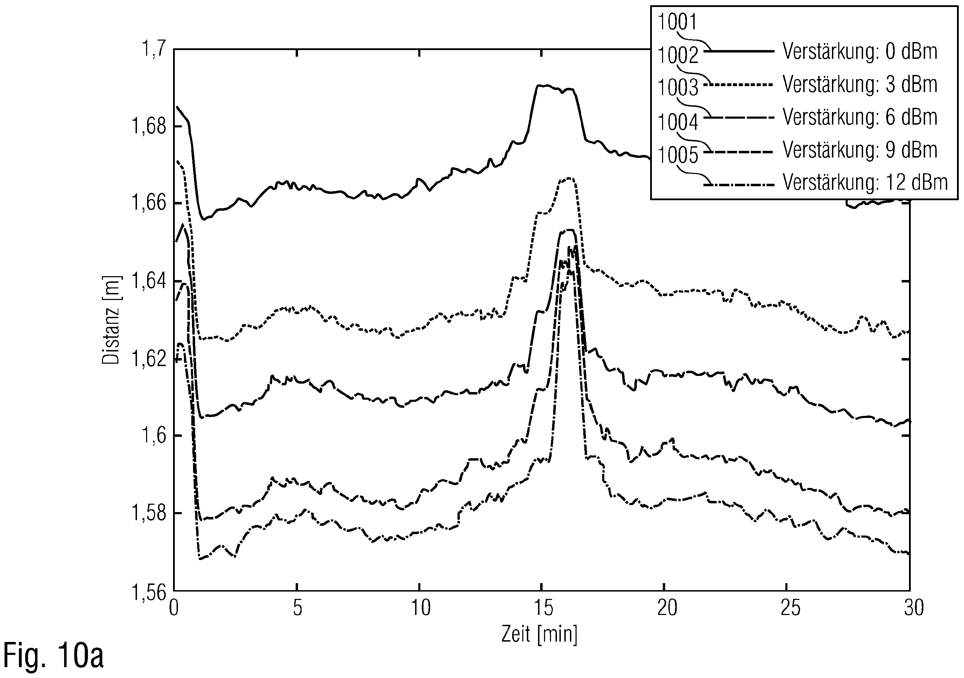

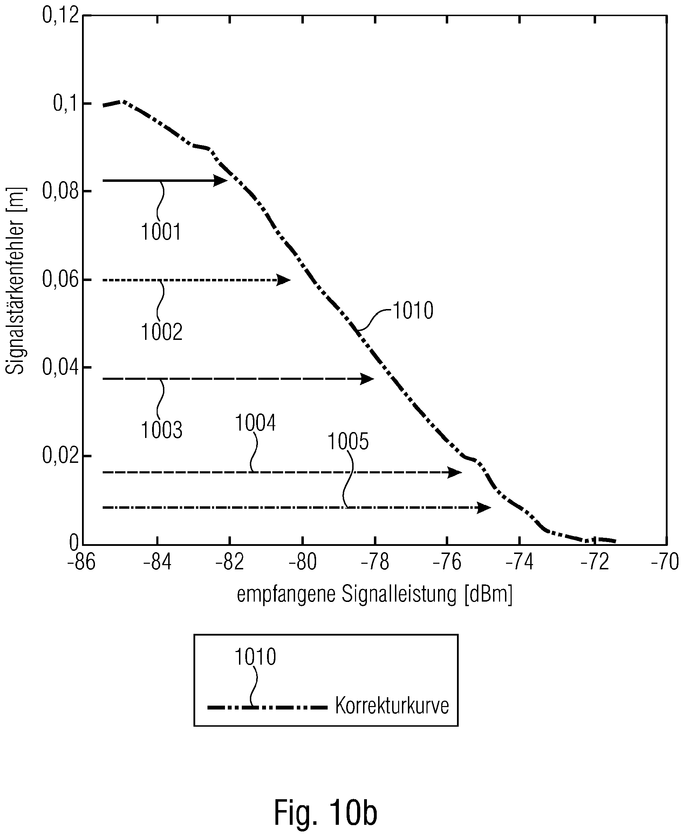

Das fünfte-Experiment wurde mit einer Verstärkung, die von 12 dBm gemäß Kurve 1005 mit einer Schrittweite von 3 dBm bis zu 0 dBm gemäß Kurve 1001 in Fig. 10 (a) sinkt, wiederholt. Dementsprechend wurden die Kurven 1004, 1003 und 1002 bei 9 dBM, 6 dBm und 3 dBm gemessen. Die Signalverstärkung wird verändert, nachdem der Trimmwert seinen letztendlichen Wert erreicht hat. Dies ist insbesondere für die Messungen mit einer Signalverstärkung von 9 dBm zu 12 dBm zu unterschiedlichen Zeiten zu beobachten. In [21] wurde gezeigt, wie die Korrekturkurve zwischen der empfangenen Signalleistung und der Zeitstempelverschiebung automatisch erhalten werden kann. In Fig. 10 (b) ist Korrekturkurve 1010 exemplarisch dargestellt. In Fig. 10 (a) sind die Distanzmessungen des fünften Experiments dargestellt. Es ist zu beobachten, dass diese Korrekturkurve nur für eine bestimmte Frequenzdifferenz zutrifft, die nicht konstant ist. Mit anderen Worten der Fehler der ermittelten Korrekturkurve hängt bevorzugt von der Frequenzdifferenz und der Signalstärke ab.

*G. Interpretationen der Ergebnisse*

In Tabelle I sind die Beobachtungen der vorherigen Experimente zusammengefasst.

**Tabelle I** - Beobachtete Abhängigkeiten

| Beobachtung | Parameter | Haben/hat Einfluss auf | Parameter |
|---|---|---|---|
| A | Übertragungsleistung | > | Frequenzdifferenz |
| B | Übertragungsleistung und Frequenzdifferenz | - > | Empfangene Leistung |
| C | Übertragungsleistung und Frequenzdifferenz | - > | Zeitstempel |

Die erste Beobachtung A stellt fest, dass die Übertragungsleistung die Frequenzdifferenz beeinflusst. Der Grund für diese Abhängigkeit kann darin bestehen, dass die Analogphasendetektoren einer Phasenregelschleife (PLL), bei denen die Schleifenverstärkung eine Funktion der Amplitude ist, das Fehlersignal beeinflussen und damit auch die sog. Fangzeit (Pull-in-Zeit), welche einer Gesamtzeit entspricht, die die PLL zum Verriegeln braucht. Die zweite Beobachtung B gibt an, dass die Übertragungsleistung und die Frequenzdifferenz die empfangene Signalleistung beeinflussen. Es ist offensichtlich, dass eine höhere Übertragungsleistung auch eine höhere gemessene empfangene Leistung verursacht. Mit kleinerer Frequenzdifferenz sind beide Stationen näher an einer kleinen Frequenzdifferenz.

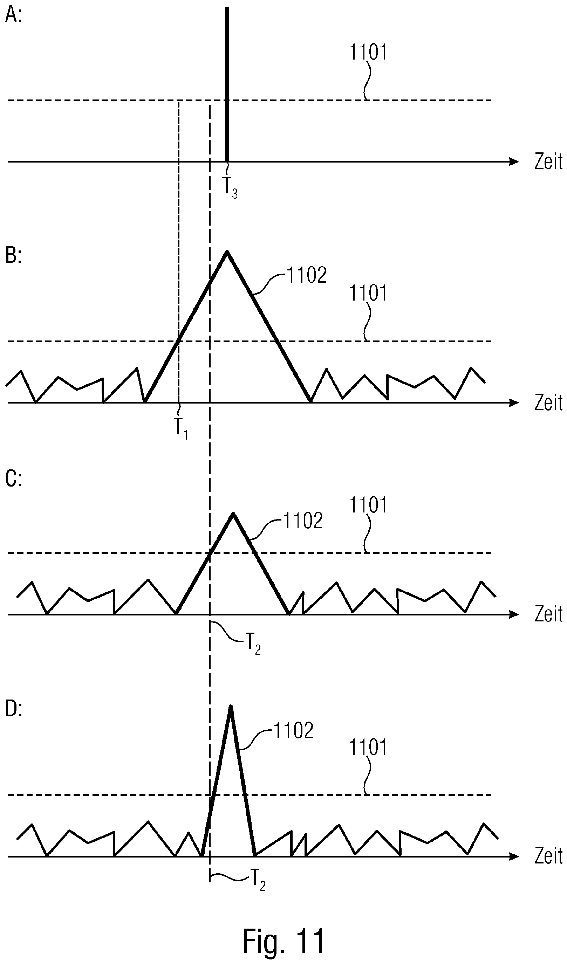

Dies ermöglicht ein Übertragen von mehr Energie, weshalb auch die gemessene empfangene Signalleistung höher ist. Die Beobachtung C ist für die Entfernungsmessung sehr interessant, weil sie den Zeitstempel betrifft. Der Grund für die Signalleistung und die Frequenzdifferenz bei dem Zeitstempel könnte durch den LED-Algorithmus (Engl.:leading edge detection Algorithmus) verursacht sein. Dieser Algorithmus ist ein Mikrocode, der in den Direktzugriffspeicher (RAM) der DW1000-IC geladen ist. Er wird bei jedem Frame-Empfang ausgeführt, um die Ankunftszeit (TOA=time of arrival) des Frame zu berechnen [9]. Es ist dem Endbenutzer nicht möglich, den Code dieses Algorithmus zu verändern. Nach der Digitalabtastung des empfangenen Signals sucht der LED-Algorithmus nach der vorauseilenden Flanke. Die erfasste Flanke ist idealerweise unendlich steil und höher als eine bestimmte Schwelle 1101, wie dies im Fall A in Fig. 11 gezeigt ist. In Wirklichkeit ist der Impuls nicht unendlich steil. Der Impuls 1102 sieht mehr aus wie bei Fall B der Fig. 11. Dies führt dazu, dass die Schwelle 1101 früher überschritten wird und der eingestellte Zeitstempel nicht auf $T_3$ eingestellt wird, sondern auf $T_1$. Wenn die empfangene Signalleistung nun reduziert wird, ist der neue Zeitstempel $T_2$ näher an $T_3$ als an $T_1$. Mit sinkender Frequenzdifferenz zwischen den Transceivern 10, 20 ist das Übertragungssignalspektrum höher. Mit höherem Signalspektrum oder höherer Bandbreite wird der Impuls 1102 schärfer, wie im Fall D in Fig. 11 gezeigt ist. Dies hat auch Auswirkungen auf den Zeitstempel $T_2$, der nun der gleiche ist wie im Fall C, mit reduzierter Signalleistung. Mit anderen Worten, die Frequenzdifferenz hat einen direkten Einfluss auf das Setzen des Zeitstempels. Die Frequenzdifferenz führt beim Empfänger zu einer Verschiebung des Zeitstempels. Die Verschiebung des Zeitstempels wird beim Korrigieren der gemessenen Distanz basierend auf dem ermittelten Korrekturwert indirekt berücksichtigt, dadurch dass der Korrekturwert basierend auf einer gemessenen Signalstärke, einer gemessenen Frequenzdifferenz und der gemessenen Distanz berechnet wird.

KORREKTUR

Aus der vorherigen Beschreibung wurde die Kenntnis erlangt, dass die Frequenzdifferenz Einfluss auf die gemessene empfangene Signalleistung hat. Außerdem führen die empfangene Signalleistung und die Frequenzdifferenz zu einer Verschiebung des Zeitstempels. Nachfolgend ist gezeigt, wie der Zeitstempel mit der hierin beschriebenen Lehre korrigiert werden könnte.

Gemäß der hierin beschriebenen technischen Lehre ist daher eine Anordnung zum Ausführen einer automatischen Fehlerkorrektur bei einer Distanzmessung 400 zwischen zwei Transceivern 10, 20 vorgeschlagen, wobei die Anordnung mindestens zwei Transceiver 10, 20 zum Senden und/oder Empfangen eines Signals umfasst, welche eine vorgegebene Distanz $D_v$ voneinander beabstandet sind, wobei die Anordnung dazu ausgebildet ist, eine gemessene Distanz $D_1$ zwischen den mindestens zwei Transceivern 10, 20 mittels Zweiwege-Entfernungsmessung (two-way-ranging /TWR) in Abhängigkeit einer Sende-Signalstärke und einer Frequenzdifferenz des Signals zu bestimmen, und eine Sende-Signalstärke und eine Frequenzdifferenz des Signals einzustellen, wodurch ein Wert der gemessenen Distanz $D_1$ verändert ist, und einen Korrekturwert basierend auf einer gemessenen Signalstärke, einer gemessenen Frequenzdifferenz und der gemessenen Distanz $D_1$ zu berechnen, und Korrigieren der gemessenen Distanz $D_1$ basierend auf dem ermittelten Korrekturwert. Durch das Korrigieren der gemessenen Distanz $D_1$ weist die korrigierte Distanz $D_{kor}$ einen geringeren Fehler auf. Ferne sind die mindestens zwei Transceiver 10, 20 in einer bekannten vorgegebenen Distanz $D_v$ zueinander beabstandet, um die gemessene Distanz $D_1$ zu ermitteln, wobei die gemessene Distanz $D_1$ von

der bekannten vorgegebenen Distanz $D_v$ abweichen kann. Die Anordnung kann dazu ausgebildet sein, die Sende Signal-Stärke für eine Anzahl an Sende Signalstärken und/oder die Frequenzdifferenz für eine Anzahl an Frequenzdifferenzen zu verändern, dass basierend auf den gemessenen Sende Signalstärken und/oder den gemessenen Frequenzdifferenzen und der gemessenen Distanz $D_1$ eine Anzahl an Korrekturwerten berechnet werden, um eine Korrekturkurve bereitzustellen, auf welche noch nachfolgend eingegangen wird. Die Korrekturkurve kann beispielsweise in einem Speicher gespeichert werden. Bei Bedarf kann eine solche Korrekturkurve abgerufen und ausgelesen werden, um die gemessenen Werte zu korrigieren. Insbesondere kann im Betrieb der Anordnung bei einer Erfassung einer Frequenzdifferenz und einer empfangenen Signalstärke die Korrekturkurve zum Auffinden des entsprechenden Korrekturwertes dienen, um die gemessene Distanz $D_1$ zu korrigieren.

*A. Dynamisches Trimmen*

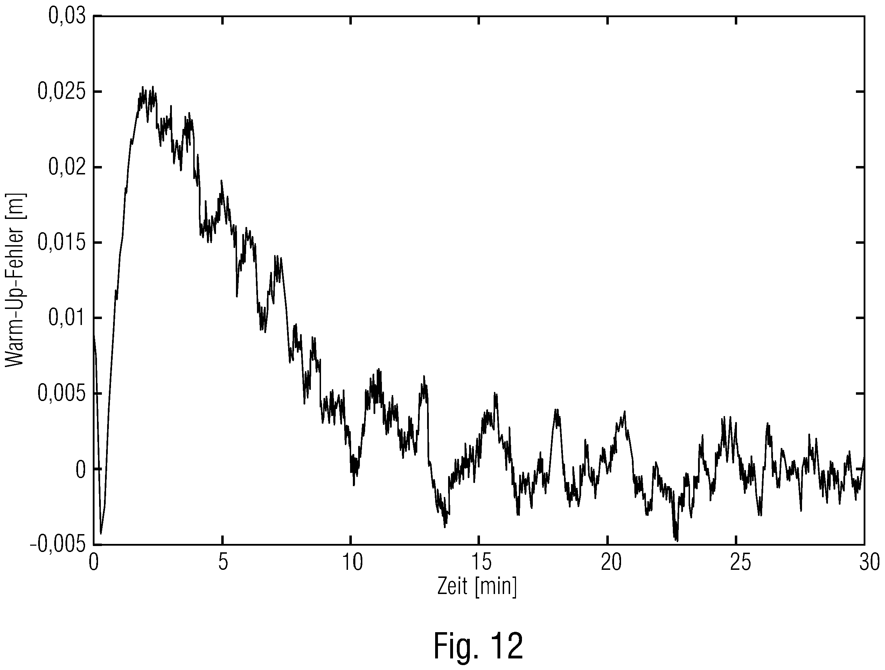

Der erste präsentierte Ansatz basiert auf der Implementierung einer Trimmroutine während des Entfernungsmessvorgangs. Der gemessene Frequenzversatz zwischen den beiden Stationen wird verwendet, um die Frequenz zu trimmen, mit dem Ziel einer Minimierung der Differenz. Fig. 12 zeigt den Warm-Up-Fehler während eines dynamischen Trimmens. Aus zwei Gründen war es nicht möglich, den Warm-Up-Fehler durch dynamisches Trimmen zu korrigieren: Erstens neigt die PLL beider Bauelemente dazu, die Frequenzdifferenz automatisch zu reduzieren; und zweitens ist die Schrittweite des Trimmens zu groß, nämlich etwa 1,5 ppm. Nachfolgend wird gezeigt, dass eine Schrittweite von 1,5 ppm zu groß ist, um diesen Fehler durch dynamisches Trimmen ordnungsgemäß zu korrigieren. In einem Ausführungsbeispiel ist die Anordnung dazu ausgebildet, bei einer Distanzmessung 400 die Frequenzdifferenz zwischen den mindestens zwei Transceivern 10, 20 auf einen vorbestimmten Wert zu regeln, insbesondere zu verringern. Mit anderen Worten, die Anordnung ist zum Trimmen ausgebildet. Bei einer Regelung der Frequenzdifferenz auf den vorbestimmten Wert, kann die Anordnung dazu ausgebildet sein, eine Korrektur der Signalstärke vorzunehmen. Insbesondere ist es denkbar, dass sich ein Maß der Korrektur der Signalstärke mit veränderter Hardware verändern kann, beispielsweise wenn ein Trimmen mit dann weniger als 1,5 ppm möglich ist.

*B. Korrekturkurve*

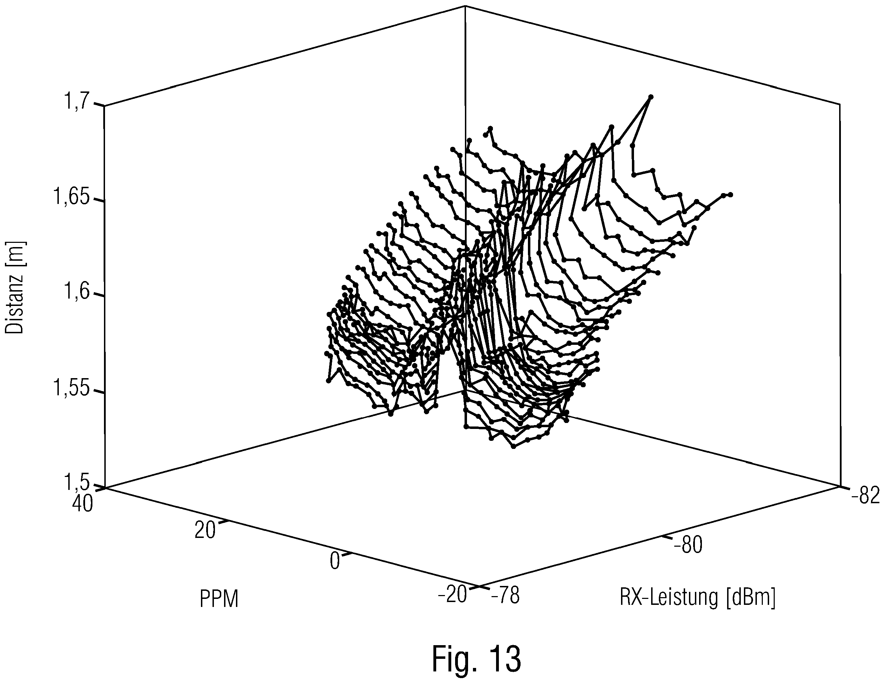

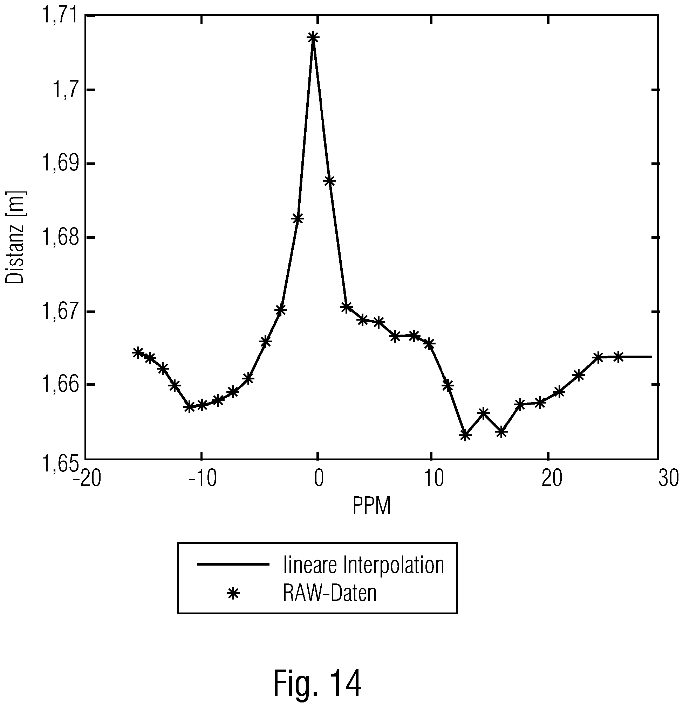

Bei dem fünften Experiment wurde die Signalleistung (dargestellt in dBM) modifiziert und die Frequenzdifferenz (dargestellt in ppm) getrimmt, um die Auswirkung auf die Distanzmessung zu erhalten. In diesem Testfall wird die Schrittweite der Sende Signalstärke auf 0,5 dBm reduziert. Außerdem wird kein Filter mit gleitendem Mittelwert zur Glättung der Daten eingesetzt. Die Daten werden gesammelt, bis sich der Trimmwert oder die Verstärkung verändert. Dies geschieht, nachdem 1000 Messungen empfangen wurden. Der Mittelwert dieser 1000 Messungen stellt einen Datenpunkt dar. Die Ergebnisse sind in Fig. 13 gezeigt. Ein bestimmter Wert dieses Diagramms kann als Referenzmessung verwendet werden. Wenn sich die Signalleistung der Frequenzdifferenz ändert, ist es möglich, die gemessene Distanz zu korrigieren, um einen konstanten Wert zu erhalten. Die Korrekturkurve kann automatisch für zwei Stationen 10, 20 ohne zusätzliche Messausrüstung erhalten werden. Leider ist die Schrittweite des Kristalltrimmens zu hoch, um die Region nahe bei einer Frequenzdifferenz von null genau abzutasten, wie in Fig. 14 durch den Peak bei 0 PPM gezeigt ist. Die lineare Interpolation in dieser Region ist zu ungenau, außerdem ist es möglich, dass der Wert bei null sogar noch höher ist. Alternativ ist es auch möglich, das Bauelement mehrmals neu zu starten, um die Abhängigkeit zwischen der Frequenzdifferenz und der Distanzmessung nahe bei null PPM zu erhalten. Dies ist jedoch nicht praktisch und die Abhängigkeit zwischen der Frequenzdifferenz und der Signalleistung ist zu komplex, um diese Art von Korrektur durchzuführen. Es ist besser, den Fehler für jede Kombination von Signalleistung und Frequenzdifferenz abzutasten.

*C. Validierung der Korrekturkurve*

In den vorherigen Teilen der Beschreibung wurde gezeigt, welcher Parameter Einfluss auf die TWR hat und wie eine Korrekturkurve zusammengesetzt sein kann. Nachfolgend wird eine mögliche Validierung der Korrekturkurve beschrieben. Der Messaufbau, wie zum Beispiel Stationsdistanz und Filtergröße, ist äquivalent zu demjenigen wie zu den Experimenten beschrieben. Die Messungen finden mit kleinen und großen Frequenzdifferenzen statt. Es wird angenommen, dass aufgrund der geringen Abtastfähigkeit nahe bei null die Experimente mit niedriger Frequenzdifferenz weniger genau sind.

- Kleine Frequenzdifferenz

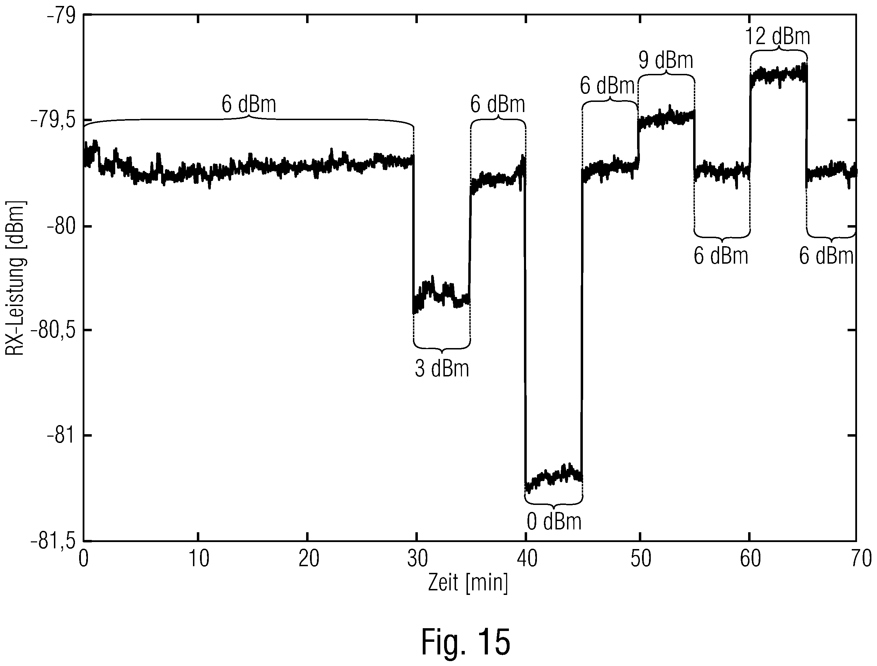

Im ersten Testfall beeinflussen wir die Frequenzdifferenz nicht. Der Bereich zwischen null bis dreißig Minuten in Figur 15 zeigt das Einschwingen der Frequenzdifferenz. Die Spitzen nach dreißig Minuten treten aufgrund von kurzen Unterbrechungen auf, mit dem Ziel eines Einstellens der neuen Verstärkungseinstellungen. Nur die Übertragungsverstärkung zwischen beiden Stationen 10, 20 hat sich bei diesem Experiment verändert. Während der ersten dreißig Minuten lag die Verstärkung bei 6 dBm, während im Folgenden die Verstärkung auf 3 dBm und 0 dBm reduziert wurde, bevor sie wieder auf 9 dBm und 12 dBm anstieg. Zwischen den Leistungsveränderungen wurde die Verstärkung auf den Anfangswert von 6 dBm zurückgesetzt. Nach den ersten 30 min wurde jede Verstärkung 5 Minuten lang gemessen. Die gemessene empfangene Signalleistung ist in Fig.15 gezeigt. Die Verstärkung der Signalleistung beim Senden der Signale kann sich dabei von der empfangenen Signalleistung unterscheiden.

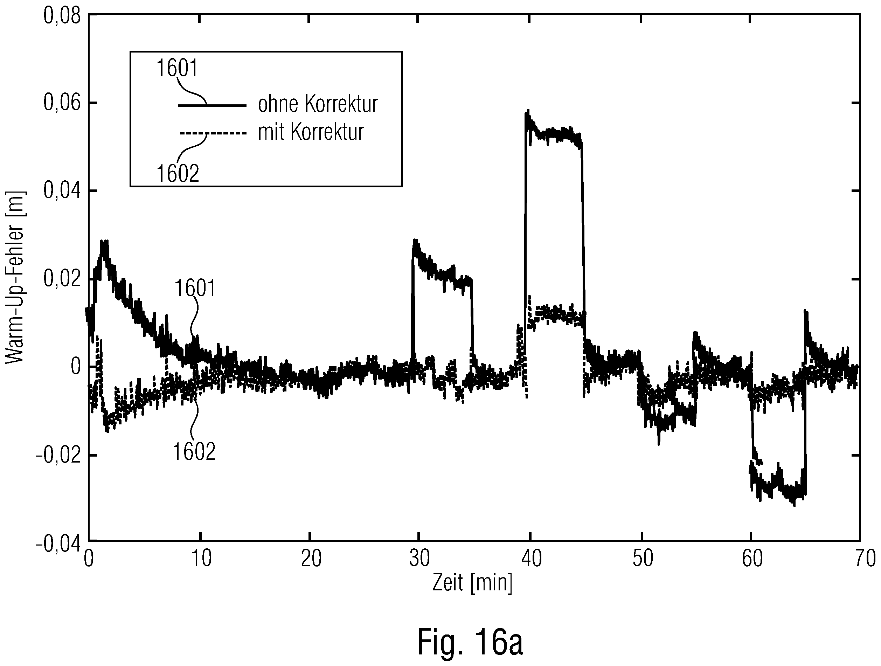

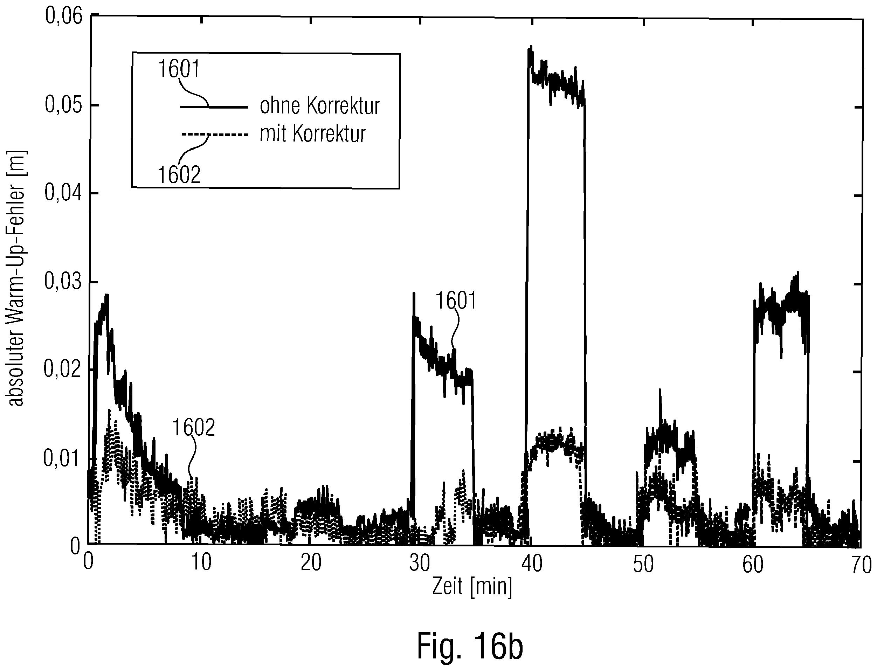

Die Frequenzdifferenz und die empfangene Signalleistung wurden verwendet, um die entsprechenden Korrekturwerte in der Korrekturkurve zu finden. In Fig. 16 (a) sind die Ergebnisse der TWR mit und ohne Korrektur dargestellt. In Fig. 16 (b) sind die Absolutwerte dargestellt. Es ist zu beobachten, dass die korrigierten Werte (Kurve 1602) verglichen mit den Ergebnissen ohne Korrektur (Kurve 1601) weniger von einem konstanten Wert um null abweichen. Insbesondere ist der Warm-Up-Fehler zu Beginn, insbesondere innerhalb der ersten fünfzehn Minuten, um ein Drittel reduziert. In einigen Regionen, wie zum Beispiel zwischen 40 und 45 Minuten, war eine Korrektur zwar messbar durchführbar, aber nicht derart durchführbar, dass ein Wert um nulle erhalten werden konnte, d.h. die Korrektur ist nicht perfekt. Der Grund hierfür könnte darin liegen, dass die Frequenzdifferenz sehr nahe bei null liegt. In diesem Bereich ist es aufgrund der großen Schrittweite von 1,5 ppm nicht möglich, gute Korrekturwerte zu erhalten. Tabelle II fasst den Mittelwert des Absolutwertes und der maximalen Spitze des Absolutwertes zusammen. Die korrigierten Werte 1602 zeigen verglichen mit den unkorrigierten Werten 1601 einen drei Mal kleineren Fehlerwert.

**Tabelle II** - Die folgende Tabelle zeigt den absoluten Mittelwert und den maximalen Wert des Warm-Up-Fehlers mit kleinen Frequenzdifferenzen [KF] und hohen Frequenzdifferenzen [HF].

|  | Mittel [m] | Max [m] |
|---|---|---|
| KF ohne Korrektur: | 0,0108 | 0,0577 |
| KF mit Korrektur: | 0,0039 | 0,0155 |
| HF ohne Korrektur: | 0,0103 | 0,0634 |
| HF mit Korrektur | 0,0023 | 0,0137 |

- Hohe Frequenzdifferenz

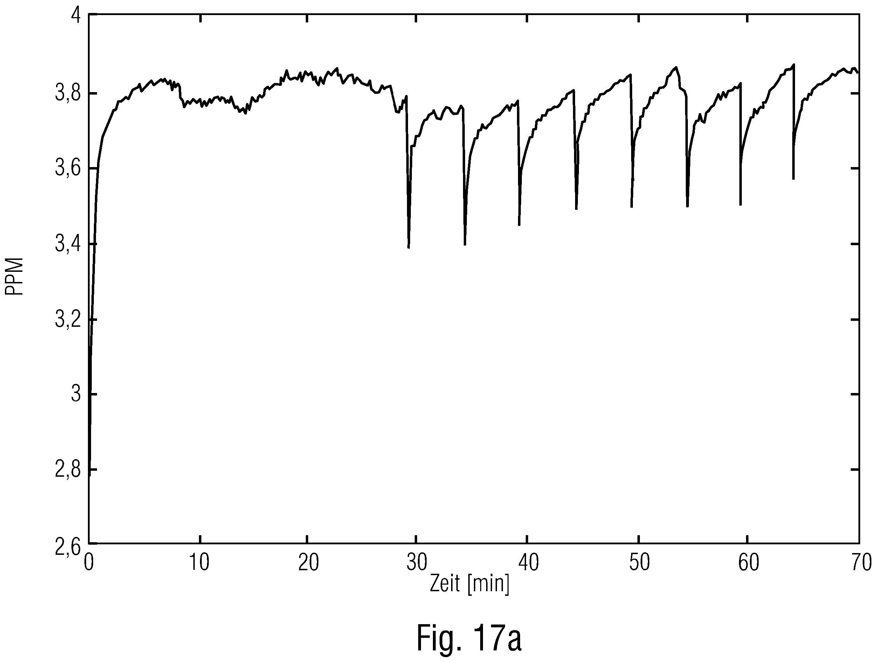

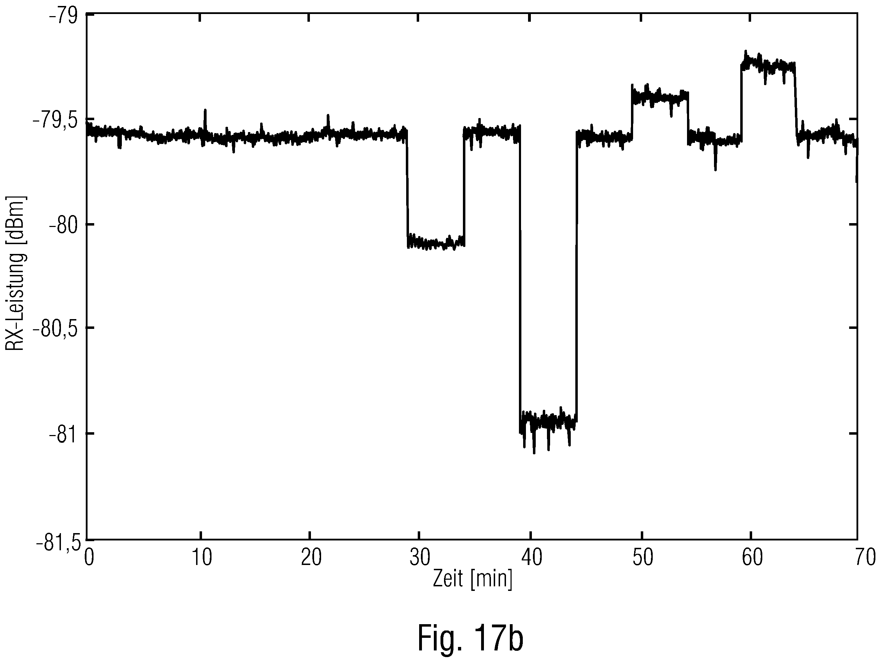

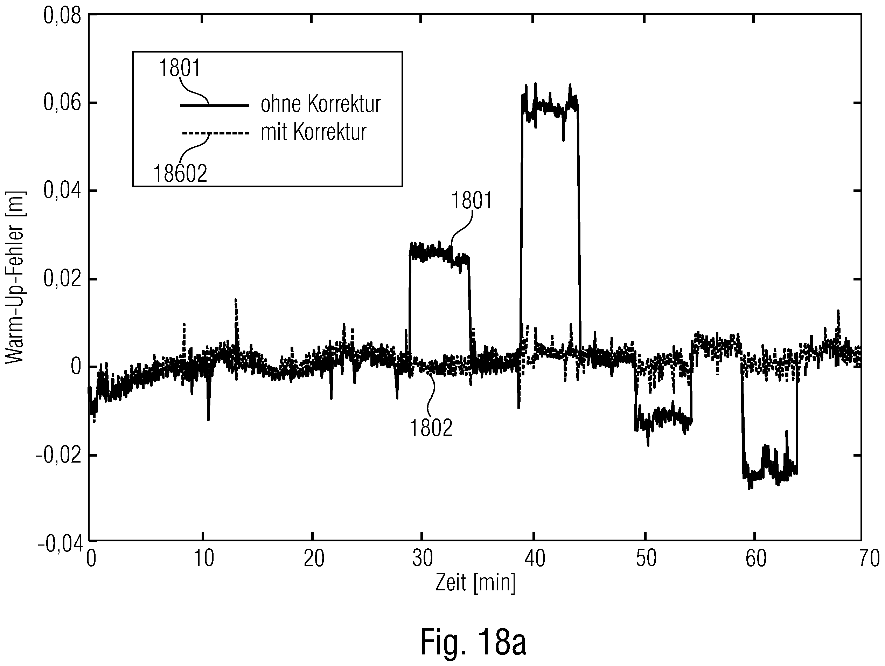

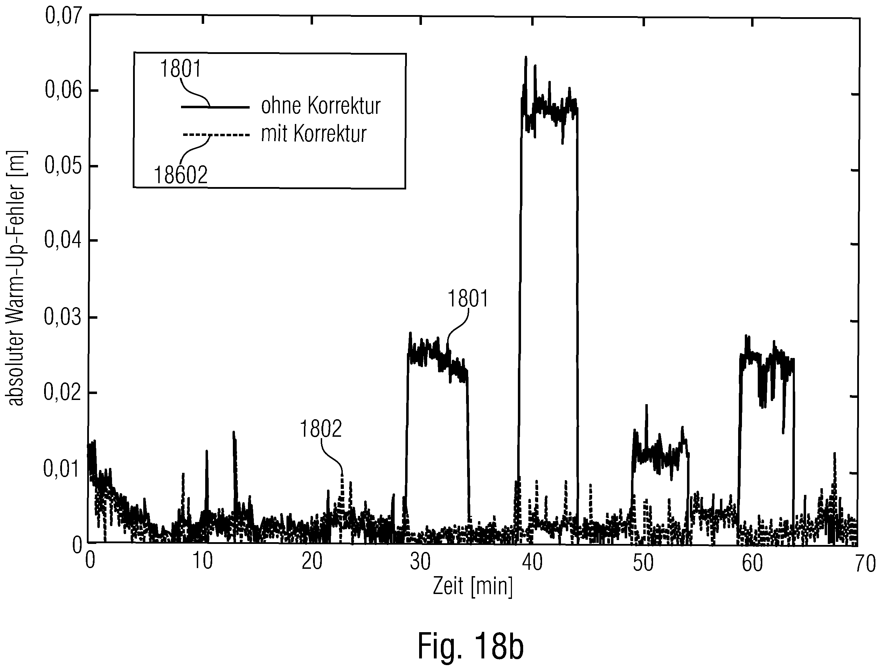

Der Aufbau des zweiten Testfalls ist äquivalent zu dem vorherigen Testfall. Der einzige Unterschied besteht darin, dass das System von Beginn an getrimmt wird, um einen höheren Versatz zu erhalten. In Figur 17 sind die Frequenzdifferenz (Fig. 17 (a)) und die empfangene Signalleistung (Fig. 17 (b)) dargestellt. Die Frequenzdifferenz liegt nun nahe bei 4 ppm. Wie in Figur 14 zu beobachten ist, ist die Veränderung der Fehlerkurve in Bezug auf die Eingangsparameter kleiner. Der Warm-Up-Fehler und der absolute Warm-Up-Fehler wie in Fig. 18 (a) und Fig. 18 (b) gezeigt sind zu Beginn kleiner, wie zu erwarten war. In Fig. 18 zeigt Kurve 1801 den nicht korrigierten Fehler und Kurve 1802 den korrigierten Fehler. Ferner ist der verbleibende Fehler der korrigierten Kurve 1802 verglichen mit dem ersten Testfall (Kurve 1602 aus Fig. 16) kleiner, insbesondere zwischen 40 und 45 Minuten. Die mittlere und die absoluten mittleren Warm-Up-Fehler sind in Tabelle II gezeigt. Diese Einstellung ist für Anwendungen von Vorteil, bei denen genaue Messungen benötigt werden. Zusätzlich haben kleine Frequenzdifferenzen einen viel kleineren Einfluss auf die Messung.

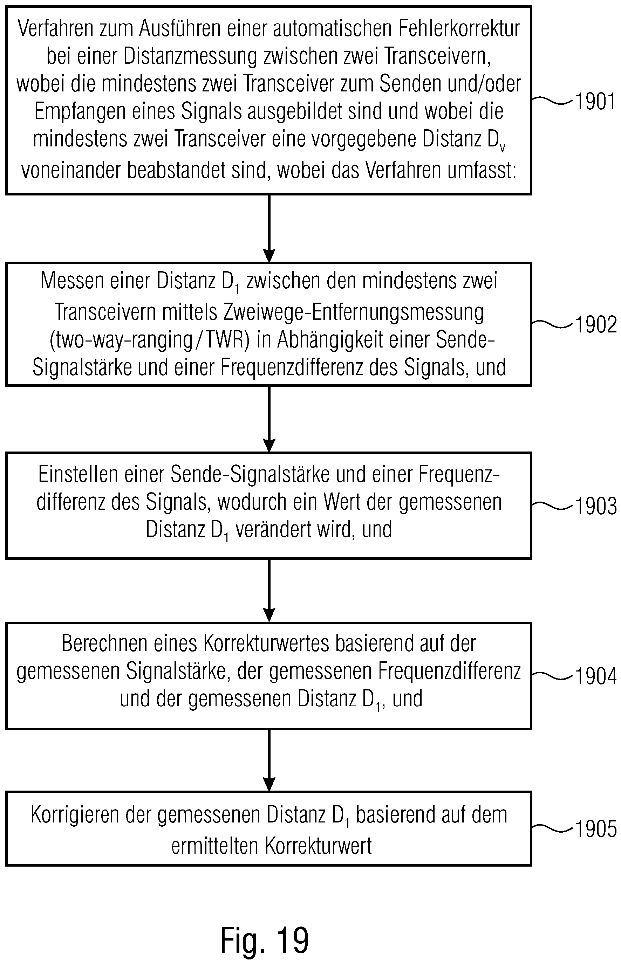

Fig. 19 zeigt ein bevorzugtes Ausführungsbeispiel eines vorgeschlagenen Verfahrens 1901 zum Ausführen einer automatischen Fehlerkorrektur bei einer Distanzmessung zwischen zwei Transceivern 10, 20, wobei die mindestens zwei Transceiver 10, 20 zum Senden und/oder Empfangen eines Signals ausgebildet sind und wobei die mindestens zwei Transceiver 10, 20 eine vorgegebene Distanz $D_v$ voneinander beabstandet sind. In einem Schritt 1902 umfasst das Verfahren ein Messen einer Distanz $D_1$ zwischen den mindestens zwei Transceivern 10, 20 mittels Zweiwege-Entfernungsmessung (two-way-ranging /TWR) in Abhängigkeit einer Sende-Signalstärke und einer Frequenzdifferenz des Signals. In einem Schritt 1903 umfasst das Verfahren ein Einstellen einer Sende-Signalstärke und einer Frequenzdifferenz des Signals, wodurch ein Wert der gemessenen Distanz $D_1$ verändert wird. In einem Schritt 1904 umfasst das Verfahren ein Berechnen eines Korrekturwertes basierend auf der gemessenen Signalstärke, der gemessenen Frequenzdifferenz und der gemessenen Distanz $D_1$. Schließlich umfasst das Verfahren in einem Schritt 1905 ein Korrigieren der gemessenen Distanz $D_1$ basierend auf dem ermittelten Korrekturwert. Weitere Ausgestaltungen des vorgeschlagenen Verfahren wurden bereits im allgemeinen Teil der Beschreibung beschrieben.

Vorliegend konnte anhand unterschiedlicher Experimente gezeigt werden, dass eine Korrelation zwischen der Signalleistung und der Frequenzdifferenz bei der Zeitstempelverschiebung zu finden ist. Es wurde gezeigt, dass der Fehler, der auch Warm-Up-Fehler genannt wird, stark mit der Frequenzdifferenz zwischen den Bauelementen verbunden ist. Es konnte ferner gezeigt werden, dass der Warm-Up-Fehler zu Beginn den größten Einfluss hat, jedoch auch später in dem Entfernungsmessvorgang auftaucht. Nach der Taktdrift-Korrektur besitzt das DecaWave® DW1000-Bauelement zunächst eine Genauigkeit von 10 cm für die Zwei-Wege-Entfernungsmessung. Gemäß der hierin vorgeschlagenen Lehre kann eine weitere Verbesserung der Genauigkeit erzielt werden. Wenn die Auswirkung der Signalleistung und der Frequenzdifferenz ordnungsgemäß korrigiert wird, ist es möglich, eine Genauigkeit von weniger als 1 cm zu erhalten. Die höhere Genauigkeit ermöglicht eine Verwendung dieses Systems in anderen Technologiegebieten, wie beispielsweise der Tomographie, mit dem Ziel einer Erfassung der Zeitverzögerung, die durch ein durchdrungenes Material oder das Material selbst verursacht wird. Dies wäre nicht möglich, wenn die Flugzeit-Messungen von der Signalstärke oder der Frequenzdifferenz zwischen den Bauelementen abhingen.

Mit der vorgeschlagenen technischen Lehre wurde eine automatische Fehlerkorrektur vorgeschlagen, die keine zusätzliche Messausrüstung oder eine Veränderung der Hardware erforderlich macht. Alternativ ist es auch möglich, die Hardware zu verändern, um die Schrittweite für das Taktfrequenztrimmen durch zusätzliche Kondensatoren zu reduzieren. Das dynamische Trimmen mit kleinerer Schrittweite ermöglicht ein individuelles Erhalten der Korrekturkurve für jede Station. An diesem Punkt kann die Korrekturkurve für sowohl Messtechniken der Ankunftszeit als auch Messtechniken einer Differenz der Ankunftszeit verwendet werden. Die hierin vorgeschlagene technische Lehre ist einerseits eine Verbesserung gegenüber dem Stand der Technik und kann andererseits in vielen Anwendungsgebieten zum Einsatz kommen, wo eine genaue Wegmessung erforderlich ist.

Auch wenn einige Aspekte im Zusammenhang mit einer Vorrichtung oder Anordnung beschrieben wurden, ist klar, dass diese Aspekte auch eine Beschreibung des entsprechenden Verfahrens darstellen, wobei ein Block oder eine Vorrichtung einem Verfahrensschritt oder einem Merkmal eines Verfahrensschrittes entspricht. Analog dazu stellen Aspekte, die im Kontext eines Verfahrensschritts beschrieben werden, auch eine Beschreibung eines entsprechenden Blocks oder Elements oder Merkmals einer entsprechenden Vorrichtung dar.

Die erfinderischen Methoden können auf einem digitalen Speichermedium gespeichert oder auf einem Übertragungsmedium wie einem drahtlosen Übertragungsmedium oder einem drahtgebundenen Übertragungsmedium wie dem Internet übertragen werden.

Je nach bestimmten Umsetzungsanforderungen können Ausführungsformen der Erfindung in Hardware oder in Software umgesetzt werden. Die Umsetzung kann mit einem digitalen Speichermedium, z.B. einer Diskette, einer DVD, einer CD, einem ROM, einem PROM, einem EPROM, einem EEPROM oder einem FLASH-Speicher, auf dem elektronisch lesbare Steuersignale gespeichert sind, die mit einem programmierbaren Computersystem so zusammenwirken (oder zusammenwirken können), dass das jeweilige Verfahren durchgeführt wird.

Einige erfindungsgemäße Ausführungsformen bestehen aus einem Datenträger mit elektronisch lesbaren Steuersignalen, die mit einem programmierbaren Rechnersystem so zusammenwirken (können), dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung einer der Methoden wirksam ist, wenn das Computerprogrammprodukt auf einem Computer läuft. Der Programmcode kann z.B. auf einem maschinenlesbaren Träger gespeichert werden.

Andere Ausführungsformen umfassen das auf einem maschinenlesbaren Träger gespeicherte Computerprogramm zur Durchführung einer der hier beschriebenen Methoden.

Mit anderen Worten, eine Verkörperung der erfinderischen Methode ist daher ein Computerprogramm mit einem Programmcode zur Durchführung einer der hier beschriebenen Methoden, wenn das Computerprogramm auf einem Computer läuft.

Eine weitere Verkörperung des erfinderischen Verfahrens ist daher ein Datenträger (oder ein digitales Speichermedium oder ein computerlesbares Medium), der das Computerprogramm zur Durchführung eines der hierin beschriebenen Verfahren enthält und darauf aufgezeichnet ist.

Eine weitere Verkörperung des erfinderischen Verfahrens ist daher ein Datenstrom oder eine Folge von Signalen, die das Computerprogramm zur Durchführung eines der hier beschriebenen Verfahren darstellen. Der Datenstrom oder die Signalfolge kann z.B. so konfiguriert sein, dass er oder sie über eine Datenkommunikationsverbindung, z.B. über das Internet, übertragen werden kann.

Eine weitere Ausführungsform umfasst ein Verarbeitungsmittel, z.B. einen Computer oder eine programmierbare Logikvorrichtung, die so konfiguriert oder angepasst ist, dass sie eine der hier beschriebenen Methoden ausführt.

Eine weitere Verkörperung umfasst einen Computer, auf dem das Computerprogramm zur Durchführung einer der hier beschriebenen Methoden installiert ist.

In einigen Ausführungsformen kann ein programmierbares Logikbauelement (z.B. ein feldprogrammierbares Gate-Array) verwendet werden, um einige oder alle Funktionalitäten der hier beschriebenen Methoden auszuführen. In einigen Ausführungsformen kann ein feldprogrammierbares Gate-Array mit einem Mikroprozessor zusammenarbeiten, um eine der hier beschriebenen Methoden durchzuführen. Im Allgemeinen werden die Methoden vorzugsweise von einer beliebigen Hardwarevorrichtung ausgeführt.

Die oben beschriebenen Ausführungsformen dienen lediglich der Veranschaulichung der Prinzipien der vorliegenden technischen Lehre. Es versteht sich von selbst, dass Änderungen und Variationen der Anordnungen und der hier beschriebenen Einzelheiten für andere Fachkräfte offensichtlich sind. Es ist daher beabsichtigt, nur durch den Umfang der bevorstehenden Patentansprüche begrenzt zu sein und nicht durch die spezifischen Details, die durch die Beschreibung und Erklärung der hier beschriebenen Ausführungsformen präsentiert werden.

Die folgenden Abkürzungen werden in dieser Anmeldung verwendet:

| | |
|---|---|
| AltDS-TWR | Alternative doppelseitige TWR |
| LOS | Sichtlinie |
| PLL | Phasenregelschleife |
| RAM | Direktzugriffsspeicher |
| SMD | Oberflächenbauelement |
| TDOA | Differenz der Ankunftszeit |
| TOA | Ankunftszeit |
| TOF | Flugzeit |
| TWR | Zwei-Wege-Entfernungsmessung |
| UWB | Ultra-Breitband |

Literaturverzeichnis

[1] J. F. M. Gerrits, J. R. Farserotu und J. R. Long, Multipath behavior of FM-UWB signals, In IEEE International Conference on Ultra-Wideband, S. 162-167, Sept. 2007.

[2] R. A. Saeed, S. Khatun, B.M. Ali und M. A. Khazani, Ultra-wideband (UWB) geolocation in NLOS multipath fading environments, In 13th IEEE International Conference on Networks zusammen mit der IEEE 7th Malaysia International Conf. on Communications, S. 6. Nov. 2005.

[3] D. Dardari, N. Decarli, A. Guerra und F. Guidi, The future of ultrawide-band localization in RFID, In IEEE International Conference on RFID, S. 1-7, Mai 2016.

[4] A. R. Jiménez Ruiz und F. Seco Granja, Comparing ubisense, bespoon, and decawave uwb location systems: Indoor performance analysis, In IEEE Transactions on Instrumentation and Measurement, Bd. 66, Nr. 8, S. 2106-2117, Aug. 2017.

[5] *Online-Artikel*, [Online]. Abrufbar: https://sixcolors.com/post/2019/09/the-u1-chip-in-the i-phone-11-is-the-beginning-of-an-ultra-wideband-revolution, [Abgerufen: 09. Okt. 2019).

[6] DecaWave markets, [Online]. Abrufbar: https://decawave.com/markets-applications/, [Abgerufen: 09. Okt. 2019].

[7] M. Haluza und J. Vesely, Analysis of signals from the DecaWave TREK1000 wideband positioning system using AKRS system, In International Conference on Military Technologies (ICMT), S. 424-429, Juni 2017.

[8] DecaWave APS014 APPLICATION NOTE: Antenna delay calibration DW1000-Based products and systems, Version 1.2, [Online], Abrufbar: https://www.decawave.com, S. 10. [Abgerufen: 09. Okt. 2019].

[9] DW1000 User Manual, Version 2.15, [Online], Abrufbar: https://www.decawave.com, S. 45 [Abgerufen: 09. Okt. 2019].

[10] Decawave APS011 APPLICATION NOTE: Sources of error in TWR, Version 1.0, [Online], Abrufbar: https://www.decawave.com, S. 10. [Abgerufen: 09. Okt. 2019].

[11] I. Dotlic, A. Connell und M. McLaughlin, Ranging Methods Utilizing Carrier Frequency Offset Estimation. In 15th Workshop on Positioning, Navigation and Communications (WPNC), S. 1-6, Okt. 2018.

[12] R. Hach, Symmetric double sided two-way ranging, [Online], Abrufbar: https//www.ieee802.org/15/pub/TG4a.html, doc: IEEE 15-05-0334-00-004a, Juni 2005.

[13] Y. Jiang und V. C. M. Leung, An Asymmetric Double Sided Two-Way Ranging for Crystal Offset, In International Symposium on Signals, Systems and Electronics, S. 525-528, Juli 2007

[14] D. Neirynck, E. Luk und M. McLaughlin, An alternative double-sided two-way ranging method, In 13th Workshop on Positioning, Navigation and Communications (WPNC), S. 1-4, Okt. 2016.

[15] R. Zandian und U. Witkowski, Robot self-localization in ultra-wideband large scale multi-node setups, In 14th Workshop on Positioning, Navigation and Communications (WPNC), S. 1-6, 2017.

[16] V. Navrätil, J. Krska, F. Vejra2ka und V. Korecek, *Chained wireless synchronization algorithm for UWB-TDOA positioning,* In IEEE/ION Position, Location and Navigation Symposium (PLANS), S. 149-157, 2018.

[17] R. Zandian und U. Witkowski, Implementation Challenges of Synchronization of UWB Nodes in TDoA Structures, International Conference on Indoor Positioning and Indoor Navigation (IPIN), S. 1-8, 2018.

[18] J. Cano, S. Chidami und J. L. Ny, A Kalman Filter-Based Algorithm for Simultaneous Time Synchronization and Localization in UWB Networks, In International Conference on Robotics and Automation (ICRA), S. 1431-1437, 2019.

[19] A. Ledergerber, M. Hamer und R. D Andrea, A robot self-localization system using oneway ultra-wideband communication, In IEEE/RSJ International Conference on Intelligent Robots and Systems (IROS), S. 3131-3137, 2015.

[20] D. L. Adamy, EW102: A Second Course in Electronic Warfare, Boston, London: Artech House, Juli 2004.

[21] J. Sidorenko, V. Schatz, M. Arens, N. Scherer-Negenborn und U. Hugentobler, DecaWave UWB clock drift correction andpower self-calibration, In Sensors, S. 16, Juli 2019.

[22] Produkt-Handbuch RSX-10, [Online]. Abrufbar: http://www.rakon.com, [Abgerufen: 9. Okt. 2019.

**Patentansprüche**

1. Anordnung zum Ausführen einer automatischen Fehlerkorrektur bei einer Distanzmessung (400) zwischen zwei Transceivern (10, 20), wobei die Anordnung mindestens zwei Transceiver (10, 20) zum Senden und/oder Empfangen eines Signals im Ultra-Breitbandbereich umfasst, welche eine vorgegebene Distanz ($D_v$) voneinander beabstandet sind, wobei die Anordnung dazu ausgebildet ist,

   bei der Distanzmessung (400) die Frequenzdifferenz zwischen den mindestens zwei Transceivern (10, 20) auf einen vorbestimmten Wert zu regeln,
   eine zu messende Distanz ($D_1$) zwischen den mindestens zwei Transceivern (10, 20) mittels Zweiwege-Entfernungsmessung (two-way-ranging /TWR) in Abhängigkeit einer Sende-Signalstärke und einer Frequenzdifferenz des Signals zu bestimmen, und
   eine Sende-Signalstärke und eine Frequenzdifferenz des Signals einzustellen, wodurch ein Wert der zu messenden Distanz ($D_1$) verändert ist, und
   einen Korrekturwert basierend auf einer gemessenen Signalstärke, einer gemessenen Frequenzdifferenz und der gemessenen Distanz ($D_1$) zu berechnen, und
   Korrigieren der gemessenen Distanz ($D_1$) basierend auf dem ermittelten Korrekturwert.

2. Anordnung nach Anspruch 1, wobei durch das Korrigieren der gemessenen Distanz ($D_1$) die korrigierte Distanz ($D_{kor}$) einen geringeren Fehler aufweist.

3. Anordnung nach einem der Ansprüche 1 oder 2, wobei die mindestens zwei Transceiver (10, 20) in einer bekannten vorgegebenen Distanz ($D_v$) zueinander beabstandet sind, um die gemessene Distanz ($D_1$) zu ermitteln, wobei die gemessene Distanz ($D_1$) von der bekannten vorgegebenen Distanz ($D_v$) abweicht.

4. Anordnung nach einem der Ansprüche 1 bis 3, wobei die Anordnung dazu ausgebildet ist, die Sende Signal-Stärke für eine Anzahl an Sende Signalstärken und/oder die Frequenzdifferenz für eine Anzahl an Frequenzdifferenzen zu verändern, dass basierend auf den gemessenen Sende Signalstärken und/oder den gemessenen Frequenzdifferenzen und der gemessenen Distanz ($D_1$) eine Anzahl an Korrekturwerten berechnet werden, um eine Korrekturkurve bereitzustellen.

5. Anordnung nach Anspruch 4, wobei die Anordnung dazu ausgebildet ist, die Korrekturkurve in einem Speicher zu speichern.

6. Anordnung nach Anspruch 4 oder 5, wobei im Betrieb der Anordnung bei einer Erfassung einer Frequenzdifferenz und einer empfangenen Signalstärke die Korrekturkurve zum Auffinden des entsprechenden Korrekturwertes dient, um die gemessene Distanz ($D_1$) zu korrigieren.

7. Anordnung nach einem der Ansprüche 1 bis 6, wobei die Anordnung dazu ausgebildet ist, bei einer Distanzmessung (400) die Frequenzdifferenz zwischen den mindestens zwei Transceivern (10, 20) auf einen vorbestimmten Wert zu verringern.

8. Anordnung nach Anspruch 7, wobei bei einer Regelung der Frequenzdifferenz auf den vorbestimmten Wert, die Anordnung dazu ausgebildet ist, eine Korrektur der Signalstärke vorzunehmen.

9. Verfahren zum Ausführen einer automatischen Fehlerkorrektur bei einer Distanzmessung zwischen zwei Transceivern (10, 20), wobei die mindestens zwei Transceiver (10, 20) zum Senden und/oder Empfangen eines Signals im Ultra-Breitbandbereich ausgebildet sind und wobei die mindestens zwei Transceiver (10, 20) eine vorgegebene Distanz ($D_v$) voneinander beabstandet sind, wobei das Verfahren umfasst:

Regeln der Frequenzdifferenz zwischen den mindestens zwei Transceivern (10, 20) bei der Distanzmessung (400) auf einen vorbestimmten Wert,

Messen einer Distanz ($D_1$) zwischen den mindestens zwei Transceivern (10, 20) mittels Zweiwege-Entfernungsmessung (two-way-ranging /TWR) in Abhängigkeit einer Sende-Signalstärke und einer Frequenzdifferenz des Signals, und

Einstellen einer Sende-Signalstärke und einer Frequenzdifferenz des Signals, wodurch ein Wert der zu messenden Distanz ($D_1$) verändert wird, und

Berechnen eines Korrekturwertes basierend auf der gemessenen Signalstärke, der gemessenen Frequenzdifferenz und der gemessenen Distanz ($D_1$), und

Korrigieren der gemessenen Distanz ($D_1$) basierend auf dem ermittelten Korrekturwert.

10. Verfahren nach Anspruch 9, wobei zum Ermitteln der gemessene Distanz ($D_1$) die mindestens zwei Transceiver (10, 20) in einer bekannten vorgegebenen Distanz ($D_v$) zueinander beabstandet werden, wobei die gemessene Distanz ($D_1$) von der bekannten vorgegebenen Distanz ($D_v$) abweicht.

11. Verfahren nach Anspruch 9 oder 10, wobei die Sende Signal-Stärke für eine Anzahl an Sende Signalstärken und/oder die Frequenzdifferenz für eine Anzahl an Frequenzdifferenzen verändert wird, so dass basierend auf den gemessenen Sende Signalstärken und/oder den gemessenen Frequenzdifferenzen und der zugehörigen gemessenen Distanz ($D_1$) eine Anzahl an Korrekturwerten berechnet werden, um eine Korrekturkurve bereitzustellen.

12. Verfahren nach einem der Ansprüche 9 bis 11, wobei die Korrekturkurve in einem Speicher gespeichert wird.

13. Verfahren nach einem der Ansprüche 9 bis 12, wobei im Betrieb der Anordnung bei einer Erfassung einer Frequenzdifferenz und einer empfangenen Signalstärke die Korrekturkurve zum Auffinden des entsprechenden Korrekturwertes ausgewertet wird, um die gemessene Distanz ($D_1$) zu korrigieren.

14. Verfahren nach einem der Ansprüche 9 bis 13, wobei bei einer Distanzmessung (400) die Frequenzdifferenz zwischen den mindestens zwei Transceivern (10, 20) auf einen vorbestimmten Wert verringert wird.

15. Verfahren nach Anspruch 14, wobei bei einer Regelung der Frequenzdifferenz auf den vorbestimmten Wert eine Korrektur der Signalstärke vorgenommen wird.

16. Computerprogramcode, welcher ein Verfahren nach einem der Ansprüche 9 bis 15 ausführt, wenn der Computerprogramcode auf einem Computercode ausführbaren Medium ausgeführt wird, und damit eine Anordnung nach einem der Ansprüche 1-8 gesteuert wird.

**Claims**

1. Arrangement for performing an automatic error correction in a distance measurement (400) between two transceivers (10, 20), wherein the arrangement includes at least two transceivers (10, 20) for transmitting and/or receiving a signal in the ultra-broadband range, spaced apart from each other by a specified distance ($D_v$), wherein the arrangement is configured to:

in the distance measurement (400), control the frequency difference between the at least two transceivers (10, 20) to a predetermined value,

determine a distance ($D_1$) to be measured between the two transceivers (10, 20) by means of two-way-ranging (TWR) depending on a transmission signal strength and a frequency difference of the signal, and

set a transmission signal strength and a frequency difference of the signal, as a result of which a value of the distance ($D_1$) to be measured is changed, and

calculate a correction value on the basis of a measured signal strength, a measured frequency difference, and the measured distance ($D_1$), and

correct the measured distance ($D_1$) on the basis of the determined correction value.

2. Arrangement according to claim 1, wherein, by correcting the measured distance ($D_1$), the corrected distance ($D_{kor}$) comprises a smaller error.

3. Arrangement according to any of claims 1 or 2, wherein the at least two transceivers (10, 20) are spaced apart in a known specified distance ($D_v$) so as to determine the measured distance ($D_1$), wherein the measured distance ($D_1$) deviates from the known specified distance ($D_v$),

4. Arrangement according to any of claims 1 to 3, wherein the arrangement is configured to change the transmission signal strength for a number of transmission signal strengths and/or the frequency difference for a number of frequency differences, so that, on the basis of the measured transmission signal strengths and/or the measured frequency differences and the measured distance ($D_1$), a number of correction values is calculated to provide a correction curve.

5. Arrangement according to claim 4, wherein the arrangement is configured to store the correction curve in a storage.

6. Arrangement according to claim 4 or 5, wherein, in the operation of the arrangement, when detecting a frequency difference and a received signal strength, the correction curve is used for finding the corresponding correction value so as to correct the measured distance ($D_1$).

7. Arrangement according to any of claims 1 to 6, wherein the arrangement is configured to reduce, in a distance measurement (400), the frequency difference between the at least two transceivers (10, 20) to a predetermined value.

8. Arrangement according to claim 7, wherein, in a control of the frequency difference to the predetermined value, the arrangement is configured to carry out a correction of the signal strength.

9. Method for performing an automatic error correction in a distance measurement between two transceivers (10, 20), wherein the at least two transceivers (10, 20) are configured for transmitting and/or receiving a signal in the ultra-broadband range and wherein the at least two transceivers (10, 20) are spaced apart from each other by a specified distance ($D_v$), wherein the method comprises:

   controlling the frequency difference between the at least two transceivers (10, 20) to a predetermined value in the distance measurement (400),
   measuring a distance ($D_1$) between the two transceivers (10, 20) by means of two-way-ranging (TWR) depending on a transmission signal strength and a frequency difference of the signal, and
   setting a transmission signal strength and a frequency difference of the signal, as a result of which a value of the distance ($D_1$) to be measured is changed, and calculating a correction value on the basis of the measured signal strength, the measured frequency difference, and the measured distance ($D_1$), and
   correcting the measured distance ($D_1$) on the basis of the determined correction value.

10. Method according to claim 9, wherein, for determining the measured distance ($D_1$), the at least two transceivers (10, 20) are spaced apart in a known specified distance ($D_v$), wherein the measured distance ($D_1$) deviates from the known specified distance ($D_v$).

11. Method according to claim 9 or 10, wherein the transmission signal strength is changed for a number of transmission signal strengths and/or the frequency difference is changed for a number of frequency differences, so that, on the basis of the measured transmission signal strengths and/or the measured frequency differences and the associated measured distance ($D_1$), a number of correction values is calculated to provide a correction curve

12. Method according to any of claims 9 to 11, wherein the correction curve is stored in a storage.

13. Method according to any of claims 9 to 12, wherein, in the operation of the arrangement, when detecting a frequency difference and a received signal strength, the correction curve is used for finding the corresponding correction value so as to correct the measured distance ($D_1$).

14. Method according to any of claims 9 to 13, wherein, in a distance measurement (400), the frequency difference between the at least two transceivers (10, 20) is reduced to a predetermined value.

15. Method according to claim 14, wherein, in a control of the frequency difference to the predetermined value, a correction of the signal strength is carried out.

16. Computer program code carrying out a method according to any of claims 9 to 15 when the computer program code runs on a computer-executable medium so that an arrangement according to any of claims 1 to 8 is controlled.

**Revendications**

1. Aménagement pour effectuer une correction automatique d'erreur lors d'une mesure de distance (400) entre deux émetteurs-récepteurs (10, 20), dans lequel l'aménagement comporte au moins deux émetteurs-récepteurs (10, 20) destinés à transmettre et/ou recevoir un signal dans la plage de bande ultra-large qui sont distants l'un de l'autre d'une distance prédéterminée ($D_v$), dans lequel l'aménagement est conçu pour,

   lors de la mesure de la distance (400), régler la différence de fréquence entre les au moins deux émetteurs-récepteurs (10, 20) à une valeur prédéterminée,
   déterminer une distance ($D_1$) à mesurer entre les au moins deux émetteurs-récepteurs (10, 20) à l'aide d'une mesure de distance bidirectionnelle (two-way-ranging/TWR) en fonction d'une intensité de signal de transmission et d'une différence de fréquence du signal, et
   régler une intensité de signal de transmission et une différence de fréquence du signal, d'où est modifiée une valeur de la distance à mesurer ($D_1$), et
   calculer une valeur de correction sur base d'une intensité de signal mesurée, d'une différence de fréquence mesurée et de la distance mesurée ($D_1$), et
   corriger la distance mesurée ($D_1$) sur base de la valeur de correction déterminée.

2. Aménagement selon la revendication 1, dans lequel la distance corrigée ($D_{kor}$) présente, par la correction de la distance mesurée ($D_1$), une erreur plus petite.

3. Aménagement selon l'une des revendications 1 ou 2, dans lequel les au moins deux émetteurs-récepteurs (10, 20) sont distants l'un de l'autre d'une distance prédéterminée connue ($D_v$) pour déterminer la distance mesurée ($D_1$), dans lequel la distance mesurée ($D_1$) diffère de la distance prédéterminée connue ($D_v$).

4. Aménagement selon l'une des revendications 1 à 3, dans lequel l'aménagement est conçu pour modifier l'intensité du signal de transmission pour un nombre d'intensités de signal de transmission et/ou pour modifier la différence de fréquence pour un nombre de différences de fréquence, de sorte que soient calculées, sur base des intensités de signal de transmission mesurées et/ou des différences de fréquence mesurées et de la distance mesurée ($D_1$), un nombre de valeurs de correction pour fournir une courbe de correction.

5. Aménagement selon la revendication 4, dans lequel l'aménagement est conçu pour mémoriser la courbe de correction dans une mémoire.

6. Aménagement selon la revendication 4 ou 5, dans lequel, lors du fonctionnement de l'aménagement, en cas de saisie d'une différence de fréquence et d'une intensité de signal reçu, la courbe de correction sert à trouver la valeur de correction correspondante pour corriger la distance mesurée ($D_1$).

7. Aménagement selon l'une des revendications 1 à 6, dans lequel l'aménagement est conçu pour réduire, lors d'une mesure de distance (400), la différence de fréquence entre les au moins deux émetteurs-récepteurs (10, 20) à une valeur prédéterminée.

8. Aménagement selon la revendication 7, dans lequel, lors d'un réglage de la différence de fréquence à la valeur prédéterminée, l'aménagement est conçu pour procéder à une correction de l'intensité du signal.

9. Procédé pour effectuer une correction automatique d'erreur lors d'une mesure de distance entre deux émetteurs-récepteurs (10, 20), dans lequel les au moins deux émetteurs-récepteurs (10, 20) sont conçus pour transmettre et/ou recevoir un signal dans la plage de bande ultra-large et dans lequel les au moins deux émetteurs-récepteurs (10, 20) sont distants l'un de l'autre d'une distance prédéterminée ($D_v$), dans lequel le procédé comporte le fait de:

   régler la différence de fréquence entre les au moins deux émetteurs-récepteurs (10, 20) lors de la mesure de distance (400) à une valeur prédéterminée,
   mesurer une distance (D1) entre les au moins deux émetteurs-récepteurs (10, 20) au moyen d'une mesure de distance bidirectionnelle (two-way-ranging/TWR) en fonction d'une intensité de signal de transmission et d'une différence de fréquence du signal, et
   régler une intensité de signal de transmission et une différence de fréquence du signal, d'où est modifiée une valeur de la distance à mesurer ($D_1$), et
   calculer une valeur de correction sur base de l'intensité du signal mesurée, de la différence de fréquence mesurée et de la distance mesurée (D$_1$), et

corriger la distance mesurée (D$_1$) sur base de la valeur de correction déterminée.

10. Procédé selon la revendication 9, dans lequel, pour déterminer la distance mesurée (D$_1$), les au moins deux émetteurs-récepteurs (10, 20) sont distants l'un de l'autre d'une distance prédéterminée connue (D$_v$), dans lequel la distance mesurée (D$_1$) diffère de la distance prédéterminée connue (D$_v$).

11. Procédé selon la revendication 9 ou 10, dans lequel l'intensité du signal de transmission est modifiée pour un nombre d'intensités de signal de transmission et/ou la différence de fréquence est modifiée pour un nombre de différences de fréquence, de sorte que soient calculées, sur base des intensités de signal de transmission mesurées et/ou des différences de fréquence mesurées et de la distance mesurée associée (D$_1$), un nombre de valeurs de correction pour fournir une courbe de correction.

12. Procédé selon l'une quelconque des revendications 9 à 11, dans lequel la courbe de correction est mémorisée dans une mémoire.

13. Procédé selon l'une quelconque des revendications 9 à 12, dans lequel, lors du fonctionnement de l'aménagement, en cas de saisie d'une différence de fréquence et d'une intensité de signal reçu, la courbe de correction est évaluée pour trouver la valeur de correction correspondante pour corriger la distance mesurée (D$_1$).

14. Procédé selon l'une des revendications 9 à 13, dans lequel, lors d'une mesure de distance (400), la différence de fréquence entre les au moins deux émetteurs-récepteurs (10, 20) est réduite à une valeur prédéterminée.

15. Procédé selon la revendication 14, dans lequel il est procédé, lors d'un réglage de la différence de fréquence à la valeur prédéterminée, à une correction de l'intensité de signal.

16. Code de programme d'ordinateur qui réalise un procédé selon l'une des revendications 9 à 15 lorsque le code de programme d'ordinateur est exécuté sur un support pouvant exécuter le code informatique et que de ce fait est commandé un aménagement selon l'une des revendications 1 à 8.

$T_1^R$

$T_2^R$

10

$D_v$

30 TOF

30 TOF

20

$T_1^T$

$T_2^T$

## Fig. 1

$T_1^R$

$T_2^R$

$T_3^R$

$E_2$

10

30 TOF

30 TOF

$D_v$

30 TOF

20

$E_1$

$E_1$

$T_1^T$

$T_2^T$

$T_3^T$

## Fig. 2

Fig. 3

Fig. 4

EP 4 097 505 B1

Fig. 5

Fig. 6

Fig. 7a

EP 4 097 505 B1

Fig. 7b

Fig. 7c

EP 4 097 505 B1

Fig. 8a

Fig. 8b

Fig. 8c

Fig. 9

EP 4 097 505 B1

Fig. 10a

Fig. 10b

Fig. 11

Fig. 12

EP 4 097 505 B1

Fig. 13

Fig. 14

Fig. 15

Fig. 16a

EP 4 097 505 B1

Fig. 16b

Fig. 17a

Fig. 17b

EP 4 097 505 B1

Fig. 18a

Fig. 18b

Verfahren zum Ausführen einer automatischen Fehlerkorrektur bei einer Distanzmessung zwischen zwei Transceivern, wobei die mindestens zwei Transceiver zum Senden und/oder Empfangen eines Signals ausgebildet sind und wobei die mindestens zwei Transceiver eine vorgegebene Distanz $D_v$ voneinander beabstandet sind, wobei das Verfahren umfasst: ⟩1901

Messen einer Distanz $D_1$ zwischen den mindestens zwei Transceivern mittels Zweiwege-Entfernungsmessung (two-way-ranging / TWR) in Abhängigkeit einer Sende-Signalstärke und einer Frequenzdifferenz des Signals, und ⟩1902

Einstellen einer Sende-Signalstärke und einer Frequenzdifferenz des Signals, wodurch ein Wert der gemessenen Distanz $D_1$ verändert wird, und ⟩1903

Berechnen eines Korrekturwertes basierend auf der gemessenen Signalstärke, der gemessenen Frequenzdifferenz und der gemessenen Distanz $D_1$, und ⟩1904

Korrigieren der gemessenen Distanz $D_1$ basierend auf dem ermittelten Korrekturwert ⟩1905

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. F. M. GERRITS ; J. R. FARSEROTU ; J. R. LONG.** *Multipath behavior of FM-UWB signals, In IEEE International Conference on Ultra-Wideband,* September 2007, 162-167
- **R. A. SAEED ; S. KHATUN ; B.M. ALI ; M. A. KHAZANI.** Ultra-wideband (UWB) geolocation in NLOS multipath fading environments. *13th IEEE International Conference on Networks zusammen mit der IEEE 7th Malaysia International Conf. on Communications,* 06. November 2005
- **D. DARDARI ; N. DECARLI ; A. GUERRA ; F. GUIDI.** The future of ultrawide-band localization. *RFID, In IEEE International Conference on RFID,* 01. Mai 2016
- **A. R. JIMÉNEZ RUIZ ; F. SECO GRANJA.** Comparing ubisense, bespoon, and decawave uwb location systems: Indoor performance analysis. *In IEEE Transactions on Instrumentation and Measurement,* August 2017, vol. 66 (8), 2106-2117
- *DecaWave markets,* 09. Oktober 2019, https://deca-wave.com/markets-applications
- **M. HALUZA ; J. VESELY.** Analysis of signals from the DecaWave TREK1000 wideband positioning system using AKRS system. *International Conference on Military Technologies (ICMT),* Juni 2017, 424-429
- *DecaWave APS014 APPLICATION NOTE: Antenna delay calibration DW1000-Based products and systems,* 09. Oktober 2019, 10, https://www.deca-wave.com
- DW1000 User Manual. 09. Oktober 2019, 45
- *Decawave APS011 APPLICATION NOTE: Sources of error in TWR,* 09. Oktober 2019, 10, https://www.decawave.com
- **I. DOTLIC ; A. CONNELL ; M. MCLAUGHLIN.** Ranging Methods Utilizing Carrier Frequency Offset Estimation. *15th Workshop on Positioning, Navigation and Communications (WPNC),* Oktober 2018, 1-6
- **R. HACH.** *Symmetric double sided two-way ranging,* Juni 2005, https//www.ieee802.org/15/pub/TG4a.html
- **Y. JIANG ; V. C. M. LEUNG.** An Asymmetric Double Sided Two-Way Ranging for Crystal Offset. *International Symposium on Signals, Systems and Electronics,* Juli 2007, 525-528
- **D. NEIRYNCK ; E. LUK ; M. MCLAUGHLIN.** An alternative double-sided two-way ranging method. *13th Workshop on Positioning, Navigation and Communications (WPNC),* Oktober 2016, 1-4
- **R. ZANDIAN ; U. WITKOWSKI.** Robot self-localization in ultra-wideband large scale multi-node setups. *14th Workshop on Positioning, Navigation and Communications (WPNC),* 2017, 1-6
- **R. ZANDIAN ; U. WITKOWSKI.** Implementation Challenges of Synchronization of UWB Nodes in TDoA Structures. *International Conference on Indoor Positioning and Indoor Navigation (IPIN),* 2018, 1-8
- **J. CANO ; S. CHIDAMI ; J. L. NY.** A Kalman Filter-Based Algorithm for Simultaneous Time Synchronization and Localization in UWB Networks. *International Conference on Robotics and Automation (ICRA),* 2019, 1431-1437
- **A. LEDERGERBER ; M. HAMER ; R. D ANDREA.** A robot self-localization system using oneway ultra-wideband communication. *IEEE/RSJ International Conference on Intelligent Robots and Systems (IROS),* 2015, 3131-3137
- **D. L. ADAMY.** EW102: A Second Course in Electronic Warfare. Artech House, Juli 2004
- **J. SIDORENKO ; V. SCHATZ ; M. ARENS ; N. SCHERER-NEGENBORN ; U. HUGENTOBLER.** DecaWave UWB clock drift correction andpower self-calibration. *Sensors,* Juli 2019, 16
- *Produkt-Handbuch RSX-10,* 09. Oktober 2019, http://www.rakon.com